# EUROPEAN PATENT APPLICATION

(11) **EP 2 000 775 A1**
(43) Date of publication of application: **10.12.2008**
(21) Application number: 08009417.0
(22) Date of filing: 21.05.2008
(51) Int. Cl.: G01C 21/36

(54) **Navigation apparatus and navigation program**

(30) Priority: 08.06.2007 JP 2007152488; 28.03.2008 JP 2008086457
(71) Applicant: Aisin AW Co., Ltd., Fujii-cho Anjo-shi, Aichi 444-1192 (JP)
(72) Inventor: Kawauchi, Hiroshi, Okazaki-shi Aichi 444-8564 (JP)
(74) Representative: Kramer - Barske - Schmidtchen

(57) **Abstract**

Giving consideration to the fact that only particular words can be used as the search target, a common word in Japanese syllabary is extracted from multiple items of the destination data, and the common words thus extracted are stored as search keywords. Furthermore, the search keywords are assigned to each item of the destination data which is a search target. When a search is made for a destination, the keywords, a part of which matches the input characters, are extracted, and the keywords thus extracted are displayed as selectable keys, which allows the location candidates to be narrowed down based upon the input characters and the selected keywords. Upon the selection of a determination key, the priority levels of the extracted location candidates are adjusted according to priority score adjustment rules, and the location candidates are displayed in the form of a list in descending order of the priority level. This allows the extracted location candidates to be displayed in the form of a list in order matching the user's preference.

## Description

### 1. Field of the Invention

The present invention relates to a navigation apparatus and a navigation program, particularly to those which allow the user to search for matching items by inputting a character string, for example.

### 2. Description of the Related Art

In recent years, navigation systems which provide a guidance of vehicles have become widespread.
A navigation apparatus has: a function of searching for a route from a starting point up to a destination; a function of detecting the position of the user's own vehicle using GPS (Global Positioning System) satellites, gyro sensor, etc.; a function of displaying the route up to the destination and the current position of the user's own vehicle on a map; etc.
As described in Japanese Patent Application Publication No. H11-271084, in general, the navigation apparatus allows the user to narrow down the location candidates by inputting the name in Japanese syllabary, address, phone number of the target place via a touch panel when the user searches for the place name, facility name, etc. of the destination.
With such an arrangement, after the completion of the search by inputting the name in Japanese syllabary or genre of the target place, the location candidates are displayed on a display screen in the form of a list, which allows the user to select a desired destination from among the listed candidates.

### SUMMARY OF THE INVENTION

However, when the user searches for a place to be set to the destination by inputting the name in Japanese syllabary of the place to be set to the destination, the user needs to input the place name in Japanese syllabary one character by one. This requires the user to perform repeated operation, demanding a certain amount of operation time, which is troublesome.
Furthermore, such an arrangement does not permit the user to make a search if the name thus input in Japanese syllabary includes any syllable which does not match the name of the place.

On the other hand, some cellular phones etc., have a function of supplementing the input characters, and displaying the candidates of the characters to be input in the next step. However, with such an arrangement, the characters thus displayed are only the character candidates obtained by a prefix search and the characters which have already been input. That is to say, such an arrangement does not permit the user to narrow down the candidates using a portion of the character strings other than the prefixes.
Furthermore, the cellular phones need to provide a general-purpose search function in order to handle a situation in which various character strings can be input. In many cases, such an arrangement also displays unnecessary words as the supplemented word candidates, leading to poor ease-of-use.

On the other hand, when the navigation apparatus displays in the form of a list the destination location candidates narrowed down by making a search, the navigation apparatus displays the location candidates in order of the Japanese syllabary, or according to the map coordinates (e.g., in order of from the north to the south).
As described above, with such an arrangement, the location candidates are displayed in a fixed order. Furthermore, in a case in which a great number of location candidates have been detected, in many cases, the location candidates thus displayed include those other than the higher-placed candidates, leading to poor ease-of-use.

Accordingly, it is an object of the present invention to provide a navigation apparatus having a function of displaying the location candidates matching the user's preference, as for the narrowed down location candidates, as the higher-placed candidates in the form of a list when a search is made for the destination.

According to the present invention, the display priority level is determined based upon the content thereof and the current situation for each of the destination candidates which have been extracted by making a search. Furthermore, the destination candidates are displayed in descending order of the priority level. Thus, such an arrangement allows the extracted location candidates to be displayed in order matching the user's preference.

### BRIEF DESCRIPTION OF THE DRAWINGS

FIG. 1 is a system configuration diagram which shows a navigation apparatus according to the present embodiment;
FIG. 2 is a schematic explanatory diagram which shows the content of the destination data (location information) stored in a destination data file;
FIG. 3 is a schematic explanatory diagram which shows the content of the keywords stored in a keyword data file;
FIG. 4 is an explanatory diagram which shows the outline of priority score adjustment rules;
FIG. 5 is an explanatory diagram which shows an input device and a display;
FIG. 6 is a flowchart which shows the content of destination setting processing;
FIG. 7 is an explanatory diagram which shows an example of the display state displayed on a destination setting screen;
FIG. 8 is an explanatory diagram which shows the difference in the list display when season adjustment rules are applied as the priority score adjustment rules;
FIG. 9 is an explanatory diagram which shows the difference in the list display when weather adjustment rules are applied as the priority score adjustment rules;
FIG. 10 is an explanatory diagram which shows the difference in the list display when time adjustment rules are applied as the priority score adjustment rules;
FIG. 11 is an explanatory diagram which shows the difference in the list display when calendar adjustment rules are applied as the priority score adjustment rules;
FIG. 12 is an explanatory diagram which shows the difference in the list display when current-position adjustment rules are applied as the priority score adjustment rules;
FIG. 13 is an explanatory diagram which shows the difference in the list display when destination adjustment rules are applied as the priority score adjustment rules;
FIG. 14 is an explanatory diagram which shows the difference in the list display when location adjustment rules are applied as the priority score adjustment rules;
FIG. 15 is an explanatory diagram which shows the difference in the list display when genre adjustment rules are applied as the priority score adjustment rules;
FIG. 16 is a schematic explanatory diagram which shows the content of the destination data (location information) stored in a destination data file in a navigation apparatus modified to US specifications;
FIG. 17 is a schematic explanatory diagram which shows the content of the keywords stored in a keyword data file in the navigation apparatus modified to US specifications;
FIG. 18 is an explanatory diagram which shows an input device and a display in the navigation apparatus modified to US specifications;
FIG. 19 is an explanatory diagram which shows an example of the display state displayed on a destination setting screen in the navigation apparatus modified to US specifications;
FIG. 20 is an explanatory diagram which shows the difference in the list display when season adjustment rules are applied as the priority score adjustment rules in the navigation apparatus modified to US specifications;
FIG. 21 is an explanatory diagram which shows the difference in the list display when weather adjustment rules are applied as the priority score adjustment rules in the navigation apparatus modified to US specifications;
FIG. 22 is an explanatory diagram which shows the difference in the list display when time adjustment rules are applied as the priority score adjustment rules in the navigation apparatus modified to US specifications;
FIG. 23 is an explanatory diagram which shows the difference in the list display when calendar adjustment rules are applied as the priority score adjustment rules in the navigation apparatus modified to US specifications;
FIG. 24 is an explanatory diagram which shows the difference in the list display when current-position adjustment rules are applied as the priority score adjustment rules in the navigation apparatus modified to US specifications;
FIG. 25 is an explanatory diagram which shows the difference in the list display when destination adjustment rules are applied as the priority score adjustment rules in the navigation apparatus modified to US specifications;
FIG. 26 is an explanatory diagram which shows the difference in the list display when location adjustment rules are applied as the priority score adjustment rules in the navigation apparatus modified to US specifications; and
FIG. 27 is an explanatory diagram which shows the difference in the list display when genre adjustment rules are applied as the priority score adjustment rules in the navigation apparatus modified to US specifications.

### DETAILED DESCRIPTION OF THE PREFERRED EMBODIMENTS

### (1) Outline of Embodiment

Giving consideration to the fact that only particular words (names of locations etc.) can be used as the search target for the navigation apparatus, the present embodiment provides an arrangement in which a common word in Japanese syllabary is extracted from multiple items of the destination data as a search keyword, and the keywords thus extracted are stored in the keyword data file.
In order to create such a search keyword, a common word in Japanese syllabary is extracted from multiple items of the destination data as a search keyword, and the search keyword thus extracted is stored as the keyword data. Examples of various kinds of such common character strings include "supermarket", "university", "information", "center", "land", "bank", "amusement park", "golf', etc., each of which is included in the names of multiple locations (the names of multiple locations input in Japanese syllabary).
Furthermore, the suitable search keywords are assigned to each item of the destination data which is a search target.

It should be noted that the keywords are provided for each of "name of destination", "address", and "genre", and are stored in the keyword data file in a manner that allows the user to differentiate therebetween. Furthermore, the keywords with respect to the "name", the keywords with respect to the "address", and the keywords with respect to the "genre" are assigned to each item of the destination data.

With such an arrangement, when a search is made for a destination, a search is made for the keywords a part of which matches the input characters, and the matching keywords are displayed. The keywords thus extracted are displayed in the form of selectable keys. Such an arrangement permits the user to select a desired keyword, thereby omitting subsequent input operation. For example, such an arrangement allows the user to select a keyword of three or more characters by only two-step operation in a minimum case, i.e., an input step for inputting a single character and a selection step, thereby providing shortcut operation.

Upon inputting characters, the keywords are narrowed down. Furthermore, the destinations, a part of which matches the characters thus input in Japanese syllabary, and the destination data having a keyword, a part of which matches the characters thus input, are extracted as the location candidates.
Such an arrangement allows the location candidates to be extracted based upon a character input in Japanese syllabary, even if the name of location includes this character at an intermediate position. For example, let us consider a case in which the user inputs a character "ni" in hiragana. In this case, the restaurant name "Missoni for miso-nikomi" includes a keyword "nikomi" in hiragana, and accordingly, this keyword is extracted.
Thus, such an arrangement allows a search to be made based upon a part of the keyword from the user's memory.

Furthermore, additional keywords associated with each keyword stored in the keyword data file are also stored as the related keywords. Such an arrangement allows the location candidates to be extracted using a word, even if the word does not match the destination (name, address, genre) which is a search target in Japanese syllabary.

As described above, such an arrangement permits the user to select the keyword or related keyword predicted (extracted) based upon the input characters, in addition to the function of allowing the user to input characters. This alleviates the user's input operation. Furthermore, such an arrangement allows the user to make a search for locations over a larger area. Thus, in many cases, such an arrangement facilitates the user's input operation.
Furthermore, a keyword dictionary is created based upon the location information for the navigation, which provides a suitable amount of keywords with respect to a location search, thereby allowing the user to input data and to make a search suitable for the navigation.

Furthermore, a priority level is assigned to each keyword, which determines the listing order. For example, the priority level is adjusted according to the frequency at which the keyword is used as the name of the destinations in Japanese syllabary. With such an arrangement, the priority level is determined beforehand based upon the actual statistical usage frequency, etc.
Subsequently, upon the user selecting the determination key after the input of characters or the selection of the keyword for the narrowing-down processing, the location candidates are displayed in the form of a list in descending order of the priority level after the priority level of each of the extracted destination candidates is adjusted according to the priority score adjustment rules for adjusting the priority level based upon "season" or "location".
Thus, such an arrangement allows the extracted location candidates to be displayed in the form of a list in order matching the user's preference.

### [First embodiment]

### (2) Details of the embodiment

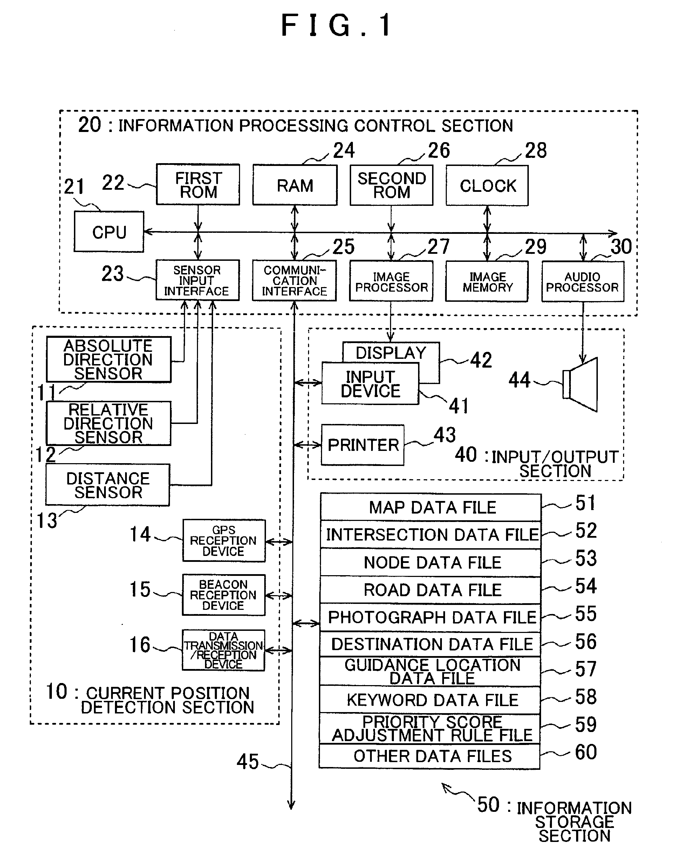

FIG. 1 is a system configuration diagram which shows a navigation system according to the present embodiment.
The navigation system is mounted on a vehicle. As shown in FIG. 1, the navigation apparatus includes a current position detection section 10, an information processing control section 20, an input/output section 40, and an information storage section 50.
First, the current position detection section 10 has the following configuration. That is to say, an absolute direction sensor 11 is a geomagnetic sensor, for example, which detects the direction of the north based upon the magnetic direction so as to detect the direction of the vehicle. As the absolute direction sensor 11, a desired mechanism may be employed as long as it can detect the absolute direction.

A relative direction sensor 12 detects whether or not the vehicle has turns at an intersection. Examples of sensors which may be employed as the relative direction sensor 12 include an optical rotation sensor and a rotary resistance volume mounted to a rotating part of a steering wheel, an angle sensor mounted to the wheel portion.
Also, a gyro sensor may be employed which detects the change in angle utilizing angular speed. That is to say, a desired mechanism may be employed as long as it can detect the angle which changes relative to the reference angle (absolute direction).
Examples of sensors which may be employed as a distance sensor 13 include a sensor which detects and counts the rotations of the wheel, a mechanism whereby the acceleration is detected, and the acceleration thus detected is twice integrated. That is to say, a desired mechanism may be employed as the distance sensor 13 as long as it can measure the movement distance of the vehicle.

A GPS (Global Positioning system) reception device 14 receives signals from man-made satellites. The GPS reception device 14 receives various kinds of information such as the signal transmission point in time, the reception device position information, the movement speed of the reception device, the movement direction of the reception device, etc.
A beacon reception device 15 receives signals transmitted from transmission devices installed in particular locations. In particular, the beacon reception device 15 receives VICS information, which allows the user to obtain the information useful in driving the vehicle, examples of which include traffic jam information, current position information, parking information, etc.

A data transmission/reception device 16 communicates with other devices external to the vehicle via a telephone line or radio waves, which allows the information to be exchanged therebetween.
For example, with regard to the data transmission/reception device 16, various applications may be made, examples of which include automobile telephones, ATIS, VICS, GPS correction, communication between vehicles, etc. Such an arrangement allows the information useful in driving the vehicle to be input and output.
The information processing control section 20 is a mechanism which performs computation and control operation based upon the information input from the current position detection section 10 and the input/output section 40 and the information stored in the information storage section 50. Furthermore, the information processing control section 20 is a mechanism which performs control operation so as to output computation results to an output unit such as a display 42, a printer 43, a speaker 44, or the like.

The information processing control section 20 has the following configuration.
That is to say, the central processing unit (CPU) 21 centrally performs overall computation and control operation for the entire navigation apparatus.
First ROM 22 stores a program with respect to navigation, specifically, a navigation program with respect to the detection of the current position, search for a route, display of guidance, etc.
An input interface 23 is a mechanism which receives information from the current position detection section 10.

RAM 24 is a storage unit for storing information that has been input by a user, such as information on the destinations, information on the locations the transit points that have been input through an input device, which will be described below. Furthermore, the RAM 24 stores the computation results computed by the CPU 21 based upon the information input by the user, the route search results, and the map information read out from the information storage section50.
A communication interface 25 is a mechanism which inputs and outputs the information obtained from the current position detection section 10, in particular, the information obtained externally (from the vehicle).

Second ROM 26 stores a program with respect to the navigation, specifically, a navigation program with respect to voice guidance.
An image processor 27 is a processing unit which performs processing for converting the vector information processed by the CPU into image information.
A clock 28 counts time.
Image memory 19 is a mechanism which stores the image information processed by the image processor.
An audio processor 30 processes audio information read out from the information storage device, and outputs the audio information thus processed to the speaker.

The input/output section 40 has a configuration including: an input device 41 which allows the user to input data such as the destination, the locations which the vehicle is to pass, the search conditions, etc; a display 42 which displays images; a printer 43 which prints out the information; and a speaker 44 which outputs audio data. The input device 41 has a configuration including: a touch panel disposed on the surface of the display 42; a touch switch; a joy stick; a key switch, etc.
The display 42 displays a map of the area around the current position, various kinds of operation screens, and a driving route to the destination.

The information storage section 50 is connected to the information processing control section 20 via a data transmission bus 45.
The information storage section 50 stores a map data file 51, an intersection data file 52, a node data file 53, a road data file 54, a photograph data file 55, a destination data file 56, a guidance location data file 57, a keyword data file 58, a priority score adjustment rule file 59, and other data files 60.
In general, the information storage section 50 has a configuration including DVD-ROM or CD-ROM which is an optical storage medium, a hard disk which is a magnetic storage medium, or the like. Also, various kinds of information storage medium may be made, examples of which include a magneto-optic disk, semiconductor memory, etc.

The map data file 51 stores map data such as a national road map, a road map, residential map, etc. for each region. The road map is composed of a map of roads, specifically, a main principal road, highway, narrow street, etc., and a map of landmarks on the ground (facilities etc.). The residential map is a town map which shows graphic data that represents the outline of each of buildings on the ground, the names of the streets, etc. The term "narrow street" as used here represents relatively narrow roads which are not national road or state road, the width of which is equal to or smaller than a predetermined value, and having no additional traffic rule information such as one-way traffic rules.

The node data file 53 stores geographical coordinate data etc., with respect to the nodes used for making a route search on a map. The road data file 54 stores data with respect to the road features such as the road position, road type, the number of lanes, the connection between the roads, etc. The photograph data file 55 stores image data of photographs of the places to be displayed in a visual manner such as various kinds of facilities and sightseeing spots, and principal intersections. The guidance location data file 57 stores the guidance data for the locations where the user needs the guidance such as the content of the road signs installed on roads and the information for junctions.

The destination data file 56 stores data used for making a search for a destination, examples of which include principal sightseeing spots, buildings, the places and facilities which can be selected as a destination such as a corporation or office, which are listed in a phone book.

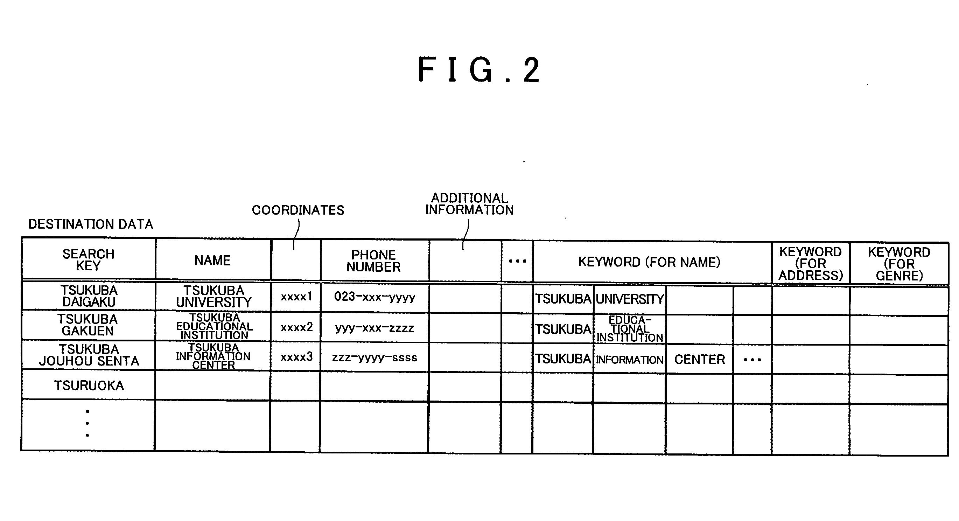

FIG. 2 is a schematic diagram which shows the content of the destination data (location information) stored in the destination data file 56.
As shown in FIG. 2, the items storing as the destination data include: a search key; name, geographical coordinates, phone number, additional information etc., and keyword employed in the present embodiment.
The search key is the name of the destination input in Japanese syllabary. The input device (Japanese syllabary keys on the touch panel in the present embodiment) allows the user to handle such a search key. Description is being made regarding an arrangement in which the search key is handled in katakana. Also, the search key may be handled in hiragana.
The graphical coordinates are x-y coordinate information which consists of the latitude and longitude of the destination. As the additional information, detailed data with respect to the destination is stored.

The keywords for the name, address, and genre are stored in a classified manner.
Among the keywords described later, particular keywords that correspond to the destination are stored. For example, as the keywords for the name, the keywords "Tsukuba" and "university" are stored for the destination "Tsukuba University". On the other hand, the keywords "Kac-Donald's", "Tokyo station" etc., are stored for the destination " Kac-Donald's Tokyo station shop".
Similarly, particular keywords that correspond to the destination are stored as the keywords for the address and genre, respectively. The term "genre" as used here has a hierarchical structure for classifying each destination. Specifically, the genre is classified into a "meal and drinking" class, a "shopping and rental" class, a "lodging" class, a "sightseeing and amusement" class, and an "automobile service facility" class, etc. Furthermore, the "shopping and rental" class has its sub-classes, e.g., a "convenience store" class, a "supermarket" class, a "discount store" class, "department store" class, etc. Such a genre is defined and stored beforehand for each destination.

In some cases, the abbreviation, nickname, etc., are stored as additional keywords for each destination even if such a keyword in Japanese syllabary includes any syllable which does not match the name of the place. For example, in a case in which the name of destination is "game arcade Kogami AB head office", the keywords "game arcade", "Kogami", and "AB head office" are stored. In some cases, a keyword "gei-sen", which is a Japanese abbreviated slang, is stored as an additional keyword.

In FIG. 1, the keyword data file 58 stores the keywords which are to be searched according to the input character string.

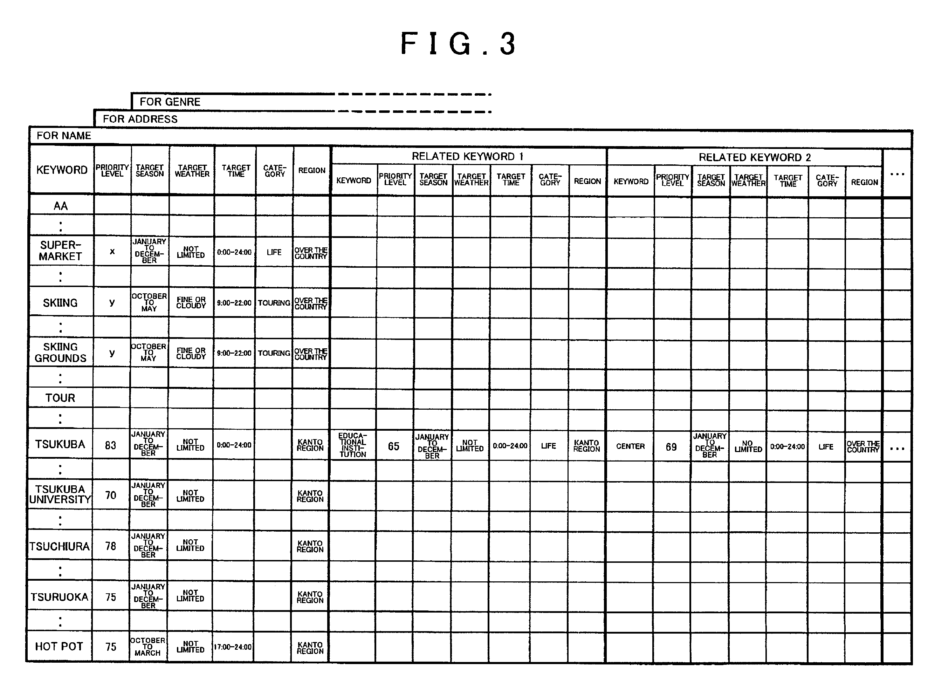

FIG. 3 is a schematic diagram which shows the content of the keywords stored in the keyword data file 58.
As shown in FIG. 3, in the same way as those stored in the destination data file 56, the keyword data file 58 stores the keywords for the name, the keywords for the address, and the keywords for the genre.
Each keyword is composed of a word (syllable) corresponding to each destination data. For example, in a case in which the number of times which a given word appears in the names, addresses, etc., of the destinations is equal to or greater than a predetermined number, such a word is extracted as a keyword. In addition, the Japanese abbreviated slang "kon-bini" which means that a "convenience store" is stored as an additional keyword. Also, the Japanese abbreviated slang "gei-sen" which means a "game arcade" is stored as an additional keyword.

With the present embodiment, the keywords narrowed down according to the input character string are displayed as the input keys, as described later. Furthermore, priority is defined for each keyword, which determines the order of displaying as the search keys the keywords narrowed down according to the input character string. Moreover, priority adjustment conditions are defined for adjusting the priority based upon the current situation (time, place, etc.), examples of which include a "season" condition, "weather" condition, "time" condition, "category" condition, and "region" condition. The content of the conditions with respect to such items are defined for each keyword.
For example, the priority of the destination candidate including a keyword "hot pot" is defined as "75" points. Furthermore, the season condition for the keyword "hot pot" is set to "October to March". In a case in which the current situation matches this season condition, the priority is incremented by a predetermined number of points n, e.g., 3 points, thereby adjusting the priority from "75" points to "78" points.

Also, related keywords can be set for the former keyword. The words which are used with high frequency as the search keywords in addition to the former keyword are set as such related keywords. For example, the words which are a part of or all the words of the name of the destination are set to the related keywords. Specifically, the related keywords "educational institution", "center", etc., are set to the related keywords for the keyword "Tsukuba".

With the present embodiment, when the user selects one from among the keywords narrowed down according to the character string thus input, the related keywords that correspond to the keyword thus selected are displayed as search keys which are the next selection candidates (input candidates). Also, in a case in which the number of the all the keywords narrowed down according to the character string thus input is less than a predetermined number (e.g., the maximum number of the keywords which can be displayed on a screen), the related keywords that correspond to the keywords thus narrowed down are displayed.
As shown in FIG. 3, like the keywords, the priority and priority adjustment conditions for adjusting the priority, i.e., a "season" condition, "weather" condition, "time" condition, "category" condition, and "region" condition, are set for each related keyword as necessary. Each related keyword is stored as a keyword in association with the corresponding destination data. Such a related keyword is used in the same way as with the keyword.

With the present embodiment, the keyword and the related keyword are used for making an AND condition, under which a search is made, thereby narrowing down the destination candidates. Specifically, in a case in which the keyword "A" and the related keyword "a" have been selected, the destination data containing the keyword "A" and the related keyword "a" is extracted, thereby narrowing down the destination data.
In the same way, the keyword and the related keyword set for the name, the address, and the genre of the destination are used for making an AND condition, under which a search is made, thereby narrowing down the destination candidates.

In FIG. 1, the priority score adjustment rule file 59 defines rules for adjusting the priority of each keyword.

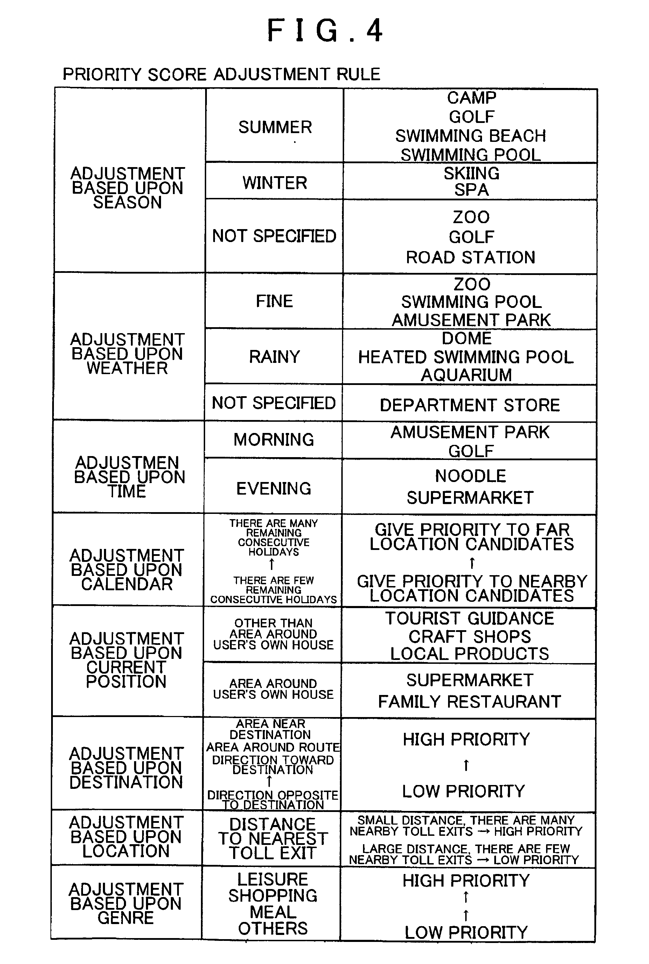

FIG. 4 is a schematic diagram which shows the priority score adjustment rules.
The priority score adjustment rules for making a search include "time rule item", "location rule item", "whether rule item", "destination rule item", and other adjustment rules. All the adjustment rule items are applied. Also, an arrangement may be made in which all the adjustment rule items are applied in a default state, and which permits the user to select desired rule items to be applied. Such an arrangement allows the destination candidates (location candidates) to be displayed in the form of a list in order matching the user's preference. Also, an arrangement may be made which allows the user to appropriately select a keyword for each item, the priority (score) of which is to be adjusted, thereby displaying the destination candidates in order further matching the user's preference.

As shown in FIG. 4, in a case in which the season when the search is made matches summer, the priority scores of the location candidates (destination candidates) including keywords associated with "camp", "golf", "swimming beach", or "swimming pool", are raised. In the same way, in a case in which the season when the search is made matches winter, the priority scores of the location candidates including keywords associated with "skiing" or "spa", are raised. In a case in which the user has not set the season rule item, the priority scores of the location candidates including keywords associated with "zoo", "golf", and "road station (along the route)" are raised.
It should be noted that, when the user determines that the score adjustment mode should not be used, the rule item is not applied (as well as the following rule items).

Also, in a case in which the whether is fine, the priority scores of the location candidates including keywords associated with "zoo", "swimming pool", or "amusement park" are raised. On the other hand, in a case in which the whether is rainy, the priority scores of the location candidates including keywords associated with "dome", "heated swimming pool", or "aquarium" are raised. In a case in which the user has not set the weather rule item, the priority scores of the location candidates including keywords associated with "department store" are raised.
The weather can be detected based upon output signal output from various kinds of sensors. For example, the weather is detected using an illuminometer, a rain sensor, a wiper driving signal, time, etc.

Also, in a case in which determination has been made based upon the current point in time that it is morning, the priority scores of the location candidates including keywords associated with "amusement park" or "golf" are raised. On the other hand, in a case in which determination has been made that it is evening, the priority scores of the location candidates including keywords associated with "noodle", or "supermarket" are raised.

Also, in a case in which determination has been made based upon the calendar that a search is being made before or during consecutive holidays, the priority scores of the far location candidates are raised according to the number of remaining holidays. With such an arrangement, in a case in which there are few remaining holidays, the priority scores of the neighboring location candidates are raised.
Let us consider a case in which the current location is Nagoya. In this case, in a case in which it is the first day of consecutive holidays today, the priority scores of the location candidates including keywords associated with "land", "sea", etc., which are associated with far places, are raised. On the other hand, in a case in which it is the last day of consecutive holidays or ordinary day today, the priority scores of the location candidates including keywords associated with "store", "shop", etc., which are neighboring places, are raised.

Also, in a case in which the current position is around the user's own house registered beforehand (e.g., the area within a 100-km radius around the user's own house), the priority scores of the location candidates including keywords associated with "supermarket" or "family restaurant" are raised. On the other hand, in a case in which the current position is outside the area around the user's own house, the priority scores of the location candidates including keywords associated with "tourist guidance", "craft shops", or "local products" are raised.

In a case in which the destination has been set, the priority scores of the location candidates positioned around the destination, the location candidates positioned along a driving route thus extracted up to the destination thus set, and the location candidates positioned in the direction toward the destination, are raised.
On the other hand, the priority scores of the location candidates positioned in the direction opposite to the destination are reduced (the priority stores are decremented).

Also, the priority scores of the location candidates are raised according to reduction in the distance between the location candidate and the nearest toll exit, and according to an increase in the number of the nearby toll exits. Conversely, the priority scores of the location candidates are reduced according to an increase in the distance between the location candidate and the nearest toll exits, and according to reduction in the number of the nearby toll exits.
Also, in a case in which the user selects the "genre" rule, the priority scores of genre items are raised in order of the "meal" item, the "shopping" item, and the "leisure" item. Furthermore, the priority scores of the other genre items are reduced.

Examples of the other priority adjustment rules include a rule in which the priority score is raised according to reduction in the number of characters (remaining characters) of the candidate name other than common characters that match the input characters or the keywords thus selected. For example, when the user selects the keywords "Sagami" and "child", the priority score is raised according to reduction in the number of remaining characters other than the keywords "Sagami" and "child". As a result, the priority is set for the destination candidates in order of "Sagami child sea", "Sagami child land", and "Sagami child land station".

With the priority score adjustment rules described above, in a case in which the score is raised, the score is incremented by a predetermined value m (e.g., m = 5). On the other hand, in a case in which the score is reduced, the score is decremented by a predetermined value m.
As the score which has not been decremented by the predetermined value m, the priority level of the keyword stored in the destination data of each location candidate is employed. In a case in which there are multiple keywords, the maximum value of the priority scores thus adjusted is employed. The priority score of the location candidate associated with no keyword is set to "50" points.

The priority adjustment rules shown in FIG. 4 have been described for exemplary purposes only. Determination is made with respect to at least one from among these rules. The rule items used for determination may be set beforehand. Also, such rule items may be selected by the user. It should be noted that the rule items are used for determination independent of each other.

The navigation apparatus having such a configuration performs route guidance operation as follows.
The navigation apparatus detects the current position by means of the current position detection section 10. Furthermore, the navigation apparatus reads the map information around the current position from the map data file 51 stored in the information storage section 50, and displays a map on the display 42.
After the setting of the destination in a destination setting processing described later, the information processing control section 20 makes a search (calculation) for multiple driving route candidates from the current position up to the destination. Then, the multiple driving route candidates thus calculated are displayed on the map thus displayed on the display 42. Upon the driver selecting any one from among the driving route candidates, the driving route thus selected is stored in the RAM 24, thereby acquiring the driving route (driving route acquisition mechanism).

It should be noted that, an arrangement may be made in which the information processing control section 20 transmits to the information processing center the current vehicle position (or the input starting point) and the destination, and receives the search results made by the information processing center with respect to the driving route up to the destination, thereby acquiring the driving route. With such an arrangement, communication with respect to the destination and the driving route is performed via the communication interface 25 by wireless communication.

During the driving of the vehicle, the current position detected by the current position detection section 10 is traced so as to perform route guidance operation.
In the route guidance operation, the vehicle position is detected on the map by performing map matching between the road data that corresponds to the driving route thus obtained in the search processing and the current position detected by the current position detection section 10. Furthermore, the map around the current vehicle position is displayed on the display 42, and the driving route thus obtained in the search processing and the current position are displayed on the map.
Furthermore, determination is made whether or not the route guidance is to be performed based upon the relation between the driving route thus obtained in the search processing and the current position. Specifically, in a case in which straight traveling continues for a predetermined distance or more, determination is made whether or not the driving route guidance such as guidance with respect to predetermined turning point candidates etc., or the region guidance is to be performed. In a case in which determination has been made that such a guidance is to be performed, the guidance is executed by means of the display 42 in a visual and audio manner.

Next, description will be made regarding destination setting processing according to the present embodiment.

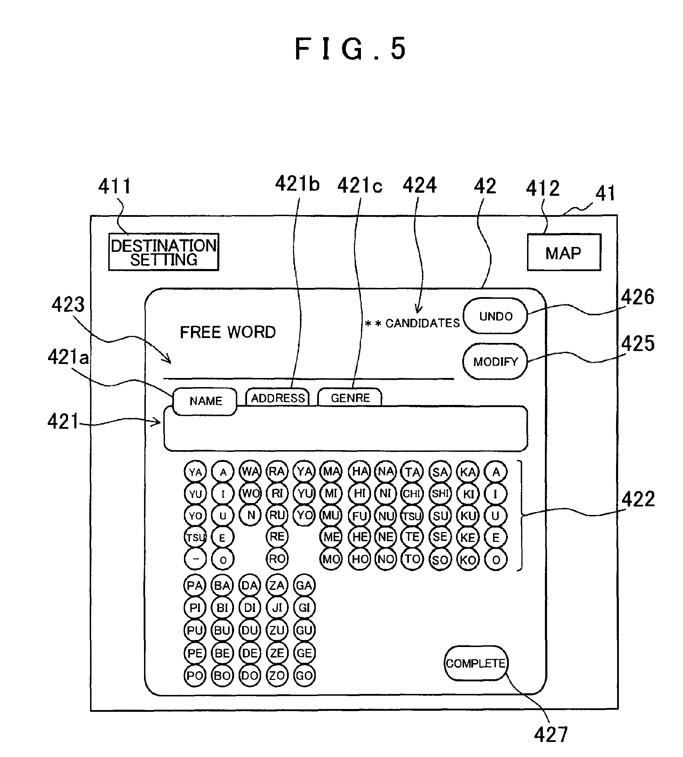

FIG. 5 shows the input device 41 and the display 42.
As shown in FIG. 5, the display 42 displays various kinds of menu screens such as a setting screen which allows the user to set the destination and a map screen which displays a map of the area around the current position. Furthermore, the display 42 includes a touch panel provided on the display screen (display), which allows the user to point a desired item by directly touching the item using the user's fingers.
The fixed frame of the input device 41 is arranged around the outer edge of the display 42. Furthermore, in the upper region of the fixed frame, a destination setting key 411 and a map key 412 which allows the user to display a map screen around the current position are provided as push buttons existing physically (hardware keys).

The destination setting key 411 is a key for displaying a destination setting screen which allows the user to set the destination, the locations which the vehicle is to pass, etc. (which will collectively be referred to as "destination" hereafter).
Upon the user selecting the destination setting key 411, the destination setting processing according to the present embodiment is performed. It should be noted that the destination thus set in the destination setting processing according to the present embodiment is used for making a route search. Furthermore, the destination thus set is used for displaying the destination itself and the location candidates around the current position on the map screen.

The display 42 shown in FIG. 5 displays a screen in the mode for displaying the destination setting screen.
The items displayed on the destination setting screen are a keyword box 421, an input keyboard 422, an input character field 423, a candidate number field 424, a modification key 425, an undo key 426, and a completion key 427.
The keyword box 421 displays the keywords (including the related keywords) narrowed down according to the input character string. The keywords thus displayed in the keyword box 421 are displayed as input keys, which permits the user to select a desired keyword by touching the keyword thus displayed. It should be noted that the keywords and the related keyword are displayed in a manner which allows the user to differentiate therebetween.
As the keyword box 421, three kinds of keyword boxes are provided, i.e., a keyword box for the name, a keyword box for the address, and a keyword box for the genre. Such an arrangement permits the user to select a desired one from among a name tab 42 1 a, an address tab 421 b, and a genre tab 421 c, thereby displaying at the frontmost the keyword field and the keywords thus narrowed down of the tab thus selected.

The input keyboard 422 are composed of keys which allow the user to input characters in Japanese syllabary. Also, the input keyboard 422 may display a numeric pad or function keys.
The input character field 423 displays a character string input via the input keyboard 422 or the keyword selected from the keyword box. The input character string and the keyword are displayed in a manner which allows the user to differentiate therebetween.
The candidate number field 424 displays the number of the location candidates (destination data) narrowed down according to the input character string or the keyword displayed in the input character field.
The modification key 425 is a key which allows the user to modify the input character string and the keyword thus selected.
The undo key 426 is a key which allows the user to return the current state to the previous state of the last operation.
The completion key 427 is a key which allows the user to display in the form of a list the destination candidates thus narrowed down according to the input character string or the keyword thus selected.
It should be noted that, on the destination setting screen as shown in FIG. 5, the character string "Free Word" is displayed on the upper-left side. This means that such an arrangement permits the user to freely input characters with respect to the keyword or related keyword, besides inputting the name of the destination in order from the first character.

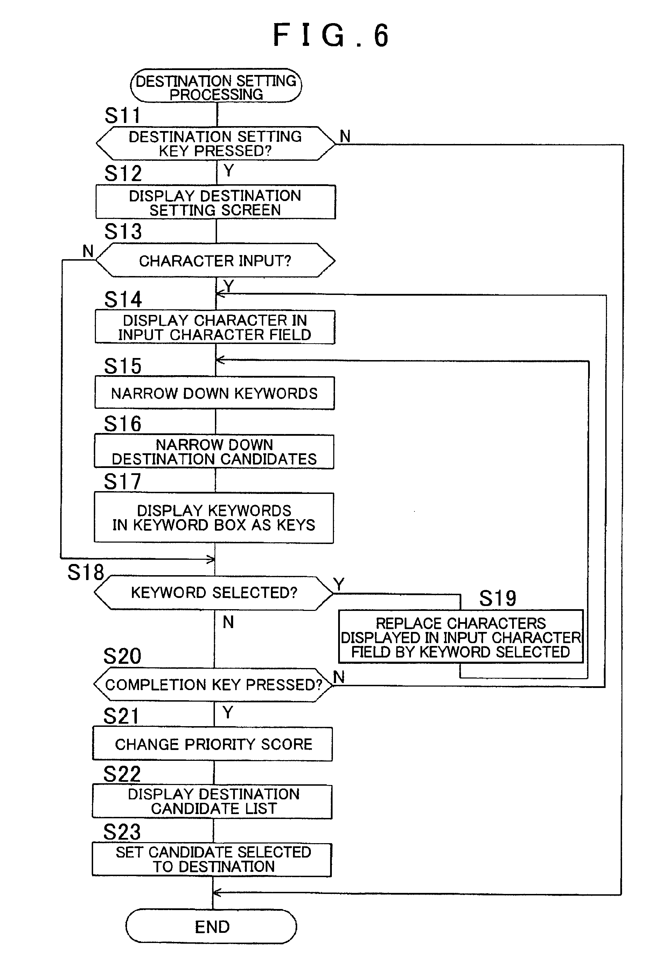

FIG. 6 is a flowchart which shows the content of the destination setting processing.
It should be noted that the flowchart shown in FIG. 6 does not show the processing performed when the user presses the modification key 425 or the undo key 426 in the destination setting operation. Such an arrangement permits the user to press the modification key 425 and the undo key 426 at a desired timing before the user presses the completion key 427. When the user presses the modification key 425, modification processing is executed. On the other hand, when the user presses the undo key 426, undo processing is executed, which returns the current state to the previous state immediately before the last operation. Such processing may be provided in the form of a separate routine.

The information processing control section 20 monitors whether or not the user has pressed (selected) the destination setting key 411 (Step 11). When the pressing of the destination setting key 411 has been detected (in a case of "YES" in Step 11), the information processing control section 20 displays the destination setting screen shown in FIG. 5 (Step 12), and monitors whether or not the characters have been input via the input keyboard 422.
When characters have been input (in a case of "YES" in Step 13), the information processing control section 20 displays the input characters in the input character field 423 (Step 14), and searches all the keywords stored in the keyword data file 58. With such an arrangement, in a case in which a part of a given keyword matches the characters (character string) displayed in the input character field 423, such a keyword is extracted, thereby narrowing down the keywords (Step 15). The keywords are narrowed down for each of the "name", "address", and "genre". The keywords thus narrowed down are stored in a predetermined region of the RAM 24.

Subsequently, the information processing control section 20 narrows down the destination candidates (location candidates) based upon the input characters displayed in the input character field and the keywords thus narrowed down. Furthermore, the information processing control section 20 displays the number of the destination candidates thus narrowed down in the candidate number field 424 (Step 16).
The destination candidates are narrowed down based upon the input characters as follows. That is to say, in a case in which a part of a given destination candidate matches input characters (one or more characters) displayed in the input character field, such a destination candidate is extracted, thereby narrowing down the search keys (the name in Japanese syllabary, see FIG. 2) for the destination data. On the other hand, the destination candidates are narrowed down based upon the keywords as follows. That is to say, in a case in which a given destination candidate stores any one of all the keywords, such a destination candidate is extracted in Step 15, thereby narrowing down the destination data.
The input characters and the keywords are used for making an AND condition. The destination data narrowed down based upon the input characters and the keywords is stored in the RAM 24 as the destination candidates.

It should be noted that, when the user inputs the first character, the destination data file 56 is searched. After the user inputs the second character, the destination candidates stored in the RAM 24 are searched. In the step in which the RAM 24 is searched, the destination candidates other than those thus extracted are removed.
It should be noted that an arrangement may be made in which the IDs of the destination candidate data are stored in the RAM 24 as the destination candidates, instead of storing all the destination data in the RAM 24. With such an arrangement, in a step for further narrowing down the destination candidates, the destination candidate data is narrowed down with reference to the destination data stored in the destination data file 56 that corresponds to the IDs stored in the RAM 24.

Subsequently, the information processing control section 20 displays the keywords thus narrowed down in the keyword box 421 as the selectable keys (Step 17). The items displayed in the keyword box 421 are the keywords that correspond to any one of the tabs 421a through 421c displayed at the frontmost.
With such an arrangement, the keywords, a part of which matches the input characters or the selected keywords, are extracted and displayed in the keyword box 421. In a case in which the number of keywords thus narrowed down is equal to or less than a predetermined number to be displayed, the related keywords of the keywords are also displayed.

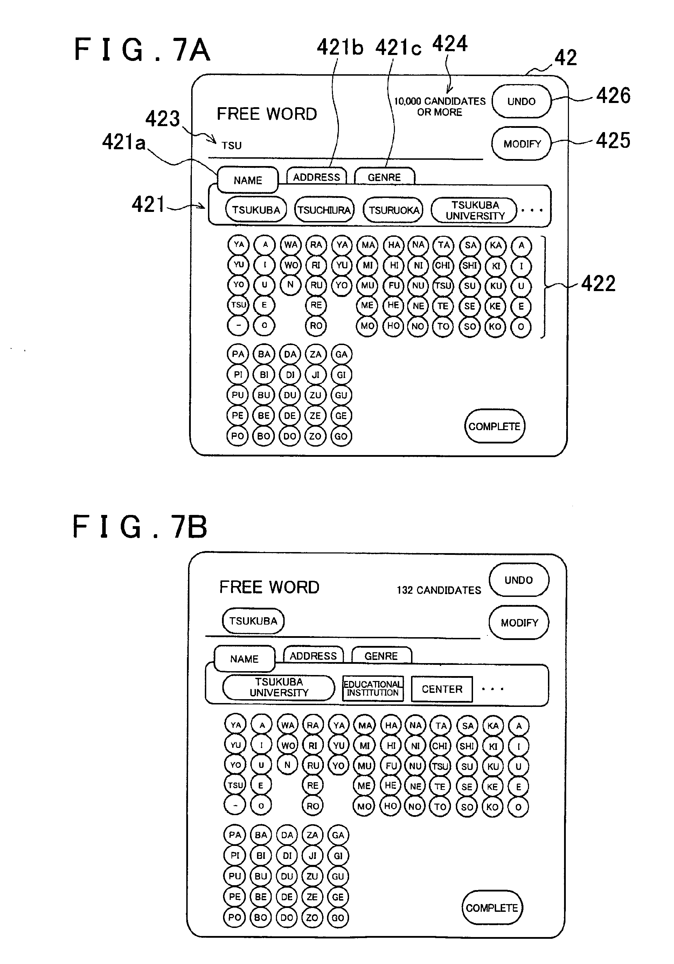

FIG. 7 shows an example of the display state of the destination setting screen in the processing following Step 17.
FIG. 7A shows the destination setting screen displayed after the user inputs a character "Tsu" in Japanese hiragana via the input keyboard 422. In this state, the character "Tsu" input in hiragana is displayed in the input character field 423 (Step 14). Furthermore, the keywords ("name" category) such as "Tsukuba", "Tsuchiura", "Tsuruoka", "Tsukuba university", etc., a part of which matches the character "Tsu" thus input in hiragana, are extracted (Step 15), and displayed in the keyword box 421 of the name tab 421a (step 17).

Upon the user touching the address tab 421 b on the destination setting screen shown in FIG. 7A, the keyword box 421 for the "address" category is displayed at the frontmost. Furthermore, the keywords for the address, which have been narrowed down according to the character "Tsu" input in hiragana, are displayed in the keyword box 421.

In Step 17, the information processing control section 20 displays the keywords thus narrowed down in the keyword box 421 according to the priority level of each keyword. The priority level of each keyword is adjusted based upon the current situation (season, weather, time, category, region, etc.). With such an arrangement, the keywords are displayed in the keyword box 421 in descending order of the priority level of each keyword after the adjustment of the priority.
The keyword "Tsukuba University" should be displayed at a position before the keywords "Tsuchiura" and "Tsuruoka" in order of Japanese syllabary. However, in FIG. 7A, the keywords "Tsuchira" and "Tsuruoka" having higher priority levels (see FIG. 3) are displayed at respective positions before the keyword "Tsukuba University".
As described above, with such an arrangement, the display order of the keywords is adjusted according to the priority level, thereby allowing the keywords to be displayed in a manner matching the user's preference. Specifically, in a case in which the current state matches "summer", "morning", and "fine", the priority levels of particular keywords such as "swimming pool" and "beach" are raised, thereby displaying the keywords in an improved manner matching the user's preference.

Returning to FIG. 6, in the next step, the information processing section 20 monitors the next input (selection) (Steps 18 and 20). When the user selects a keyword from among those displayed in the keyword box 421 (in a case of "Y" in Step 18), the information processing control section 20 replaces the input characters displayed in the input character field 423 by the keyword thus selected (Step 19). In this case, in a case in which a different keyword has already been displayed in the input character field 423 according to the previous operation, the keyword thus newly selected is displayed after the former keyword. As shown in FIG. 7B, it should be noted that the keyword is displayed in a frame so that allows the user to differentiate between the keyword and the input character string.

After the display of the keyword in the input character field 423, in the information processing section 20, the flow returns to Step 15. Then, the information processing section 20 narrows down the keywords thus selected (Step 15), and narrows down the destination candidates (Step 16).
In Step 15 after the processing in Step 19, the keywords, which have been narrowed down (in Step 15 immediately after Step 14) and are stored in the RAM 24, are searched for the keywords including a particular keyword thus selected. The keywords other than the keywords thus extracted are removed. For example, in a case in which the user has selected the keyword "Tsukuba" in FIG. 7A, the keyword "Tsukuba University" is extracted. Furthermore, the other keywords "Tsuchiura" and "Tsuruoka" are removed from the keywords.

Subsequently, the information processing control section 20 further narrows down the destination candidates stored in the RAM 24 based upon the keywords thus selected (Step 16), following which the information processing control section 20 displays the keywords thus narrowed down in Step 15 in the keyword box.
FIG. 7B shows the destination setting screen in this state. Specifically, FIG. 7B shows the destination setting screen after the user has selected the keyword "Tsukuba" via the destination setting screen shown in FIG. 7A.
The character "tsu" input in hiragana in a frame is replaced by the keyword "Tsukuba", thereby displaying the keyword "Tsukuba" in the frame. Furthermore, the keyword "Tsukuba University" extracted as a result of a further search is displayed in the keyword box 421. In this case shown in FIG. 7B, the keyword including "Tsukuba" is only a single keyword, i.e., "Tsukuba University". Accordingly, the related keywords "educational institution" and "center", each of which is associated with the selected keyword "Tsukuba", are also displayed. It should be noted that, in a case in which the total number of the keywords and the related keywords associated with the selected keyword is equal to or less than the predetermined number, the related keywords associated with the extracted keywords are also displayed.
The related keywords are displayed in addition to the keywords in descending order of the priority level after each priority level is adjusted based upon the current situation (time, place, etc.).
It should be note that the keyword displayed in the keyword field is displayed in an elliptic frame and each related keyword is displayed in a rectangular frame to allow the user to differentiate both of them.

Returning to FIG. 6, when the user inputs a character (in a case of "NO" in Step 18, and in a case of "NO" in Step 20), in the information processing control section 20, the flow returns to Step 14. Then, the information processing control section 20 performs the processing following the step (Step 14) in which the input characters are displayed.
On the other hand, when the user selects the completion key 427 (in a case of "YES" in Step 20), the information processing control section 20 adjusts, according to the priority score adjustment rules shown in FIG. 4 as an example, the priority scores with respect to the destination candidates (destination data) which have been narrowed down in Step 16 and which are stored in the RAM 24 (Step 21).
As the priority score before the priority is adjusted, the priority level of a keyword associated with the destination candidate (destination data) is employed. In a case in which there is no keyword associated with the destination candidate, the priority score of such a destination candidate is set to a predetermined value (e.g., 50).

Subsequently, the information processing control section 20 displays the destination candidates on the destination setting screen in the form of a list in descending order of the priority score thus adjusted (Step 22). Then, the information processing control section 20 sets the destination candidate, which has been selected by the user from among the destination candidates thus displayed, to the final destination (Step 23). The destination thus determined is stored in a predetermined region of the RAM 24 to complete processings.

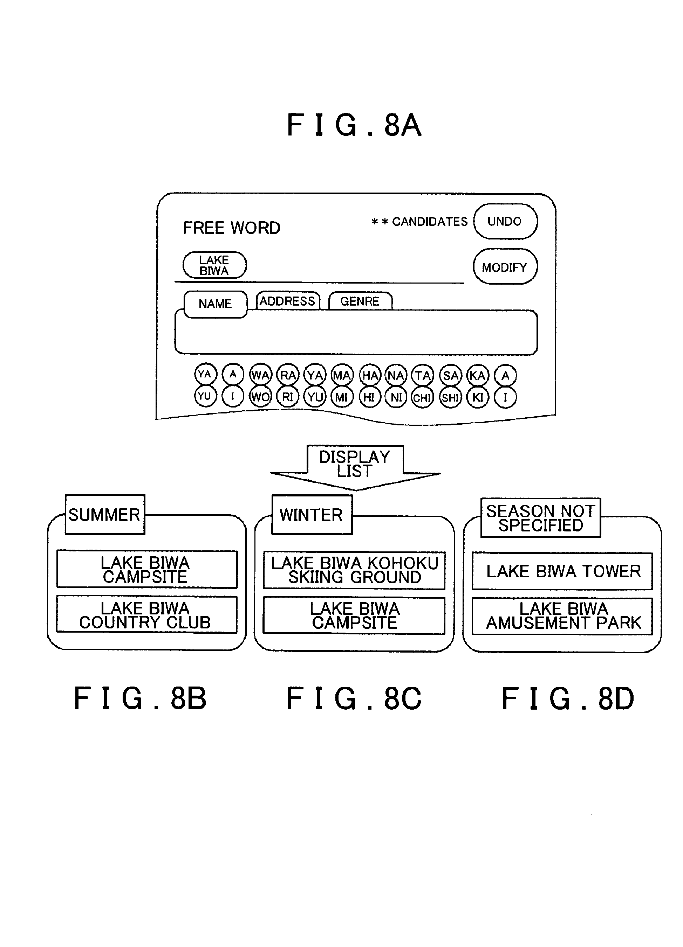

FIG. 8 through FIG. 15 show examples of different destination candidates displayed in the form of a list based upon the priority scores adjusted according to the priority score adjustment rules shown in FIG. 4.
FIG. 8 shows an example of different destination candidates displayed in the form of a list in a case in which season adjustment rules are applied as the priority score adjustment rules.
FIG. 8A shows the state in which the selected keyword "Lake Biwa" is displayed in the input character field 423. When the user selects the completion key 427 in this state, in a case in which the current situation matches "summer", the scores of the destination candidates stored in the RAM 24 are adjusted according to the priority adjustment rules. Specifically, the priority scores of the location candidates (destination candidates) including keywords associated with "camp", "golf", "swimming beach", or "swimming pool" are raised. As a result, in this case, the destination candidates are displayed in the form of a list in order of "Lake Biwa campsite", "Lake Biwa country club", etc., as shown in FIG. 8B.
On the other hand, in a case in which the current situation matches "winter", the destination candidates are displayed in the same way in the form of a list in order of "Lake Biwa Kohoku Skiing ground", "Lake Biwa campsite", etc., as shown in FIG. 8C. In a case in which the user has not specified the "season", the destination candidates are displayed in the form of a list in order of "Lake Biwa tower", "Lake Biwa amusement park", etc., as shown in FIG. 8D.

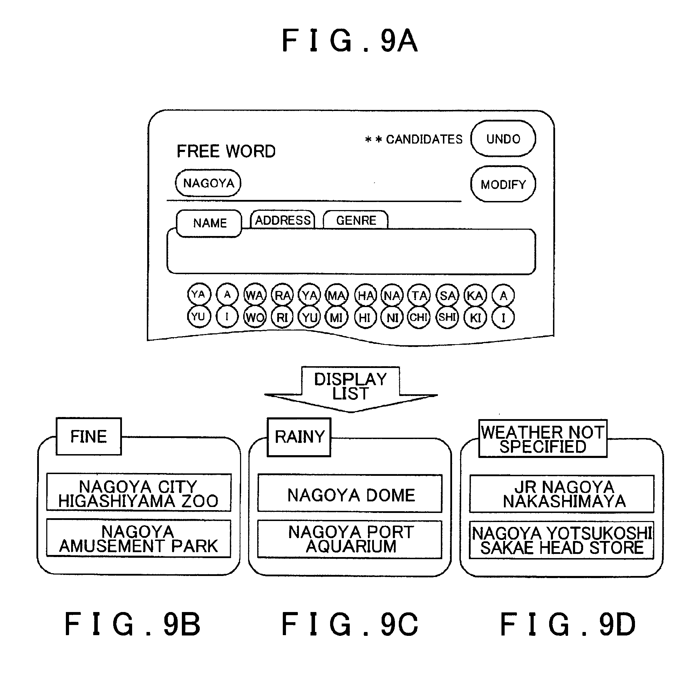

FIG. 9 shows an example of different destination candidates displayed in the form of a list in a case in which weather adjustment rules are applied as the priority score adjustment rules.
As shown in FIG. 9A, when the user selects the completion key 427 in the state in which a selected keyword "Nagoya" is displayed, in a case in which the current situation matches "fine", the priority scores of the location candidates (destination candidates) including the keywords associated with "zoo", "swimming pool", and "amusement park" are raised according to the weather adjustment rules. As a result, the destination candidates are displayed in order of "Nagoya city Higashiyama zoo", "Nagoya amusement park", etc., as shown in FIG. 9B.
On the other hand, in a case in which the current situation matches "rainy", the destination candidates are displayed in the form of a list in the same way in order of "Nagoya Dome", "Nagoya port aquarium", etc., as shown in FIG. 9C. In a case in which the user has not specified the "weather", the destination candidates are displayed in the form of a list in order of "JR Nagoya Nakashimaya", "Nagoya Yotsukoshi Sakae head store", etc.

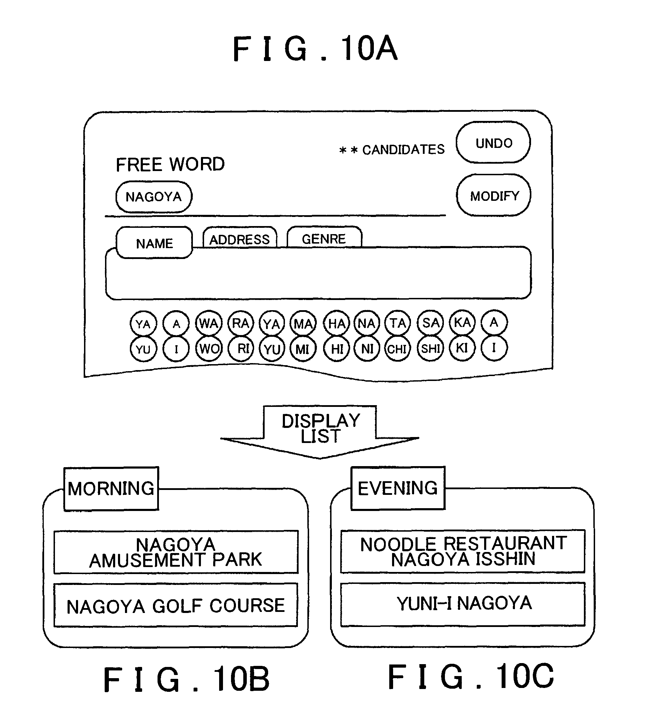

FIG. 10 shows an example of different destination candidates displayed in the form of a list in a case in which time adjustment rules are applied as the priority score adjustment rules.
As shown in FIG. 10A, when the user selects the completion key 427 in the state in which the selected keyword "Nagoya" is displayed, in a case in which the current situation matches "morning", the priority scores of the location candidates (destination candidates) including the keywords associated with "amusement park" and "golf" are raised according to the time adjustment rules. As a result, the destination candidates are displayed in order of "Nagoya amusement park", "Nagoya golf course", etc., as shown in FIG. 10B.
On the other hand, in a case in which the current situation matches "evening", the destination candidates are displayed in the form of a list in the same way in order of "Noodle restaurant Nagoya Isshin", "Yuni-i Nagoya", etc.

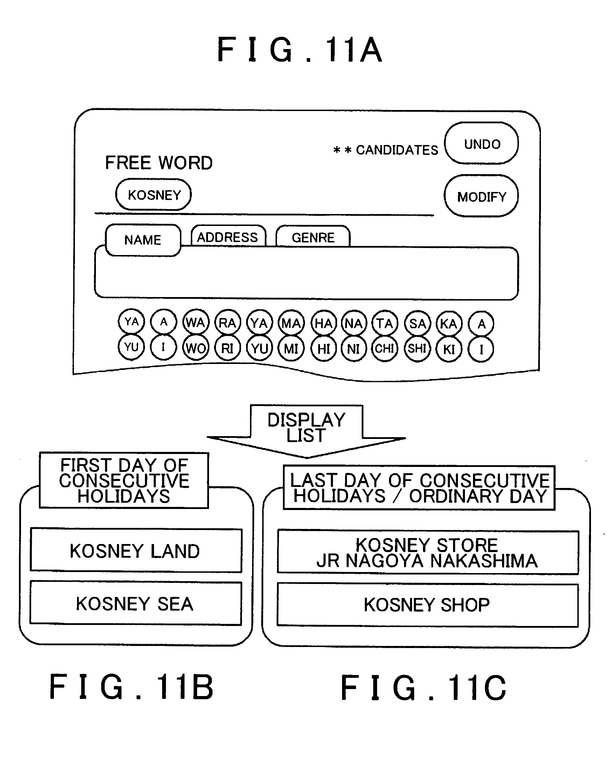

FIG. 11 shows an example of different destination candidates displayed in the form of a list in a case in which calendar adjustment rules are applied as the priority score adjustment rules.
As shown in FIG. 11A, when the user selects the completion key 427 in the state in which a selected keyword "Kosney" is displayed, in a case in which it is the first day of consecutive holidays today, according to the priority score adjustment rules, the destination candidates are displayed in the form of a list in descending order of the distance from the current position, e.g., in order of "Kosney land", "Kosney sea", etc., as shown in FIG. 11B. On the other hand, in a case in which it is the last day of consecutive holidays or an ordinary day today, the destination candidates are displayed in ascending order of the distance from the current position, e.g., in order of "Kosney store JR Nagoya Nakashima", "Kosney shop", etc., as shown in FIG. 11C.

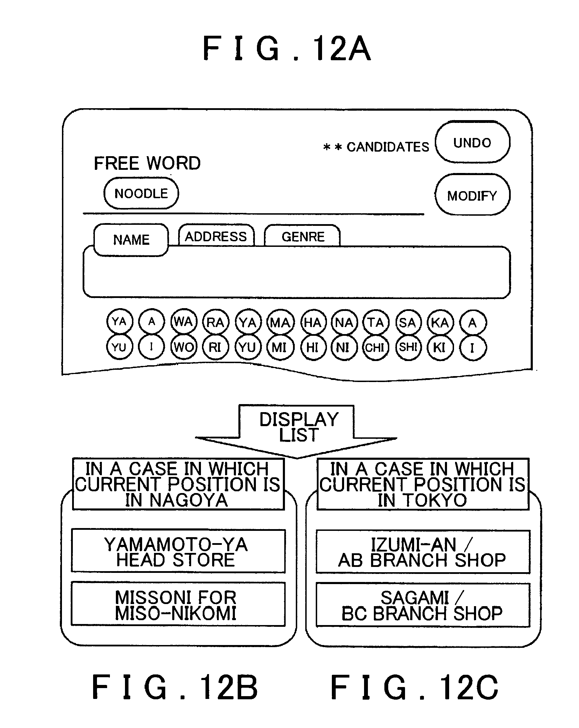

FIG. 12 shows an example of different destination candidates displayed in the form of a list in a case in which current-position adjustment rules are applied as the priority score adjustment rules.
As shown in FIG. 12A, when the user selects the completion key 427 in the state in which a selected keyword "noodle" is displayed, let us consider a case in which the position registered as the user's own house is a certain location in Tokyo, and the current position of the vehicle is in Nagoya. In this case, determination is made that the current position of the vehicle is far from the user's own house, and the destination candidates are displayed in order of "Yamamoto-ya head store", "Missoni for miso-nikomi", etc., including the keywords associated with "tourist guidance", "craft shops", or "local products", as shown in FIG. 12B. On the other hand, in a case in which the current position of the vehicle is in Tokyo, determination is made that the current position is near the user's own house, and the destination candidates are displayed in order of "Izumi-An / AB branch shop ", "Sagami / AB branch shop", etc., including the keywords associated with "supermarket" or "family restaurant", as shown in FIG. 12C.

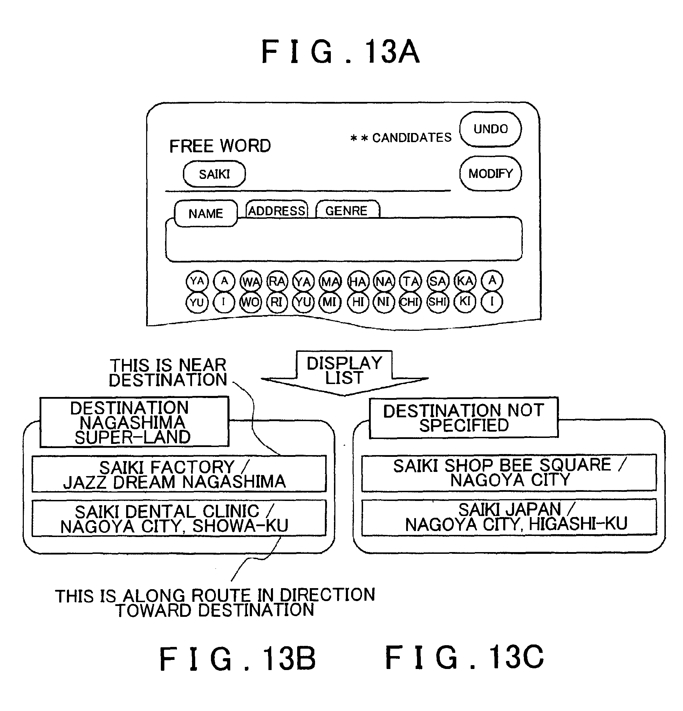

FIG. 13 shows an example of different destination candidates displayed in the form of a list in a case in which destination adjustment rules are applied as the priority score adjustment rules.
As shown in FIG. 13A, when the user selects the completion key 427 in the state in which a selected keyword "Saiki" is displayed, in a case in which "Nagashima Super-land" has already been set as the destination, the location candidates are displayed in order of "Saiki Factory / Jazz Dream Nagashima" at a position near the destination, and "Saiki Dental Clinic / Nagoya-city Showa-ku" at a position in the direction toward the destination, as shown in FIG. 13B, according to the priority score adjustment rules which raise the priority levels of the location candidates near the destination, the location candidates near the route, and the location candidates in the direction toward the destination.
On the other hand, in a case in which the user has not set the destination, the location candidates are displayed in order of "Saiki shop Bee Square / Nagoya city", "Saiki Japan / Nagoya city, Higashi-ku", etc., each of which is at a position around Nagoya which is the current position.

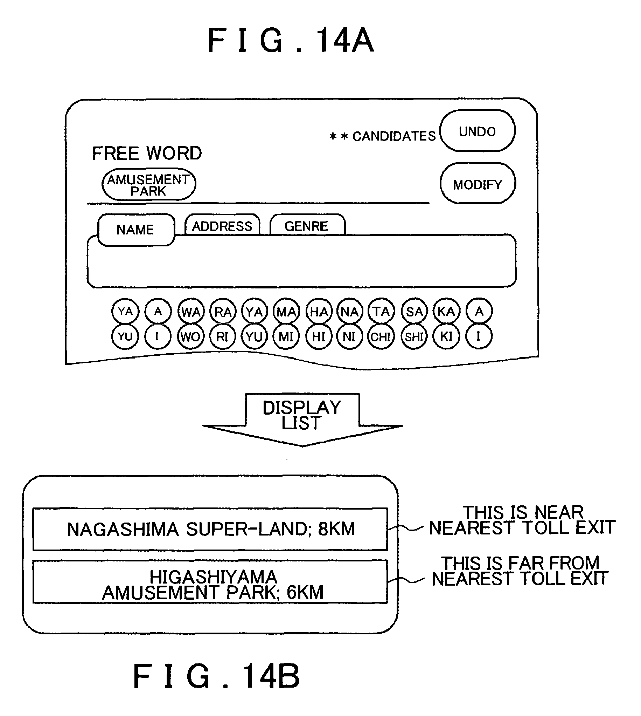

FIG. 14 shows an example of different destination candidates displayed in the form of a list in a case in which location adjustment rules are applied as the priority score adjustment rules.
As shown in FIG. 14A, let us consider a case in which the selected keyword is "amusement park", the user's own house is in Nagoya city, Naka-ku, and the current position is in Nagoya. In this case, as shown in FIG. 14B, the destination candidates are displayed in ascending order of the distance between the location candidate and the nearest toll exit, e.g., in order of "Nagashima Super-Land; 8 km", and "Higashiyama amusement park; 6 km".
It should be noted that the distance information displayed in the list, i.e., "8 km", and "6 km" are the distances between the respective places and the current position. In this state, the "Nagashima Super-Land" is displayed at a higher priority level regardless of the distance from the current position, since the distance from the toll exit is smaller.

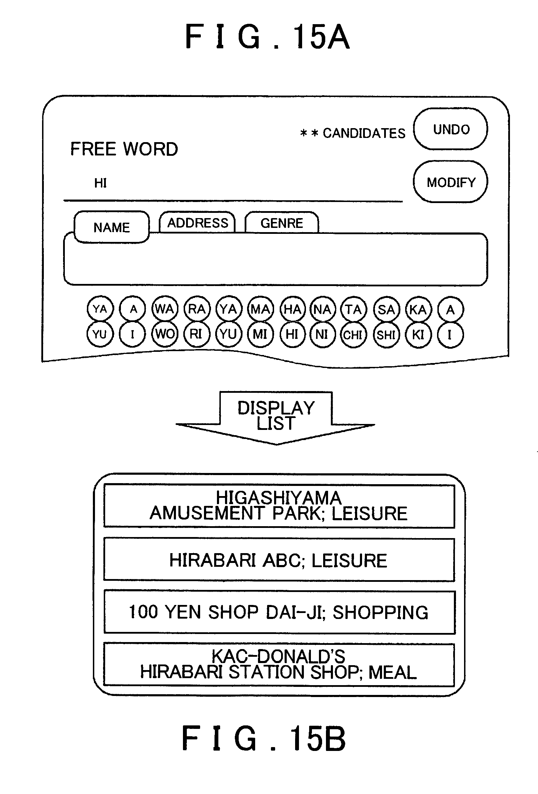

FIG. 15 shows an example of different destination candidates displayed in the form of a list in a case in which genre adjustment rules are applied as the priority score adjustment rules.
As shown in FIG. 15A, when the user selects the completion key 427 in the state in which a character "Hi" has been input in hiragana, in a case in which the user's own house thus registered is in Nagoya city, Naka-ku, the destination candidates are displayed in the form of a list according to the priority score adjustment rules which give higher priority in order of "meal", "shopping" and "leisure". As a result, the destination candidates are displayed in the form of a list in order of "Higashiyama amusement park; leisure", "Hirabari ABC; leisure", "100-yen shop Dai-ji; shopping", "Kac-Donald's Hirabari station shop; meal", etc., as shown in FIG. 15B.

As described above, the listing order is adjusted by applying the priority score adjustment rules, thereby allowing the destination candidates to be displayed in the form of a list in order more suitable for the user.
Furthermore, as described above, such an arrangement allows the user to change the priority score adjustment rules to be applied and the keywords with respect to the item to which the priority score adjustment rules are to be applied, thereby displaying a list in a more suitable manner for the user's preference.

Description has been made in the embodiment regarding an arrangement in which the situations ("season", "weather", "time", "genre", and "region") based upon which the current priority of each keyword is adjusted are stored in the keyword data file 58, and the rules for determining the listing order, in which the destination candidates are displayed in the form of a list, are stored in the priority score adjustment rule file 59. Also, such situation conditions and the rules for determining the listing order may be provided in a common form.
With such an arrangement, such rules may be stored in the keyword data file. Also, such rules may be stored as adjustment rules in an independent form. Also, such rules may be stored in a program.

Description has been made in the embodiment regarding an arrangement in which each keyword is stored in the destination data. Also, an arrangement may be made in which an ID (Identification Number) is assigned to each keyword stored in the keyword data file, and each ID is stored in the destination data.
Description has been made in the embodiment regarding an arrangement in which the keywords are stored with respect to "name", "address", and "genre", and the keywords are narrowed down and displayed for each of "name", "address", and "genre". Also, such an arrangement may be applied to any one or two from among the "name", "address", and "genre".

### [Second embodiment]

Description has been made in the aforementioned first embodiment regarding a navigation apparatus under the assumption of being used in Japanese. More specifically, description has been made in the first embodiment regarding a navigation apparatus modified to Japanese specifications, which has a configuration including the input keyboard 422 having Japanese syllabary keys which allow the user to input data in increments of Japanese syllables, and which stores data in the destination data file 56 for searching for destinations in Japan.
However, the environment in which this navigation apparatus can be used is not restricted to such Japanese environments. The specifications of the input device 41 and various kinds of data sets may be modified to a desired region, thereby providing the aforementioned input function using the keyword data overseas as well, in countries other than Japan.

Description will be made in the second embodiment regarding a navigation apparatus modified to US specifications as an example of a navigation apparatus for foreign countries other than Japan.
The system configuration of the navigation system and the flow of the destination setting processing according to the second embodiment are basically the same as those according to the first embodiment.
In the description of the second embodiment, the same components as those in the aforementioned first embodiment are denoted by the same reference numerals, description thereof will be omitted, and description will be made regarding only the differences therebetween.

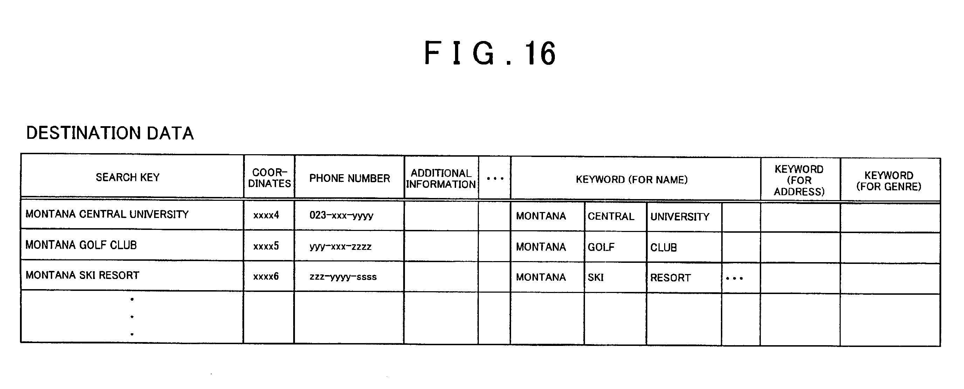

FIG. 16 is a schematic diagram which shows the content of the destination data (location information) stored in the destination data file 56.
As shown in FIG. 16, with the navigation apparatus modified to US specifications, the name of each item stored as the destination data is itself registered as a search key. Furthermore, in each search key according to the US specifications, each word is separated by a space, which is a point that differs from the search key modified to Japanese specifications.
Each search key is a "name" of a destination, which is to be associated with input data input by means of an input device (in the second embodiment, a touch panel having alphabetic keys). While search keys may be provided in mixed case, a search is made without a case-sensitive function.
In the second embodiment, the destination data file 56 stores the names of the items of the destination data in the US.

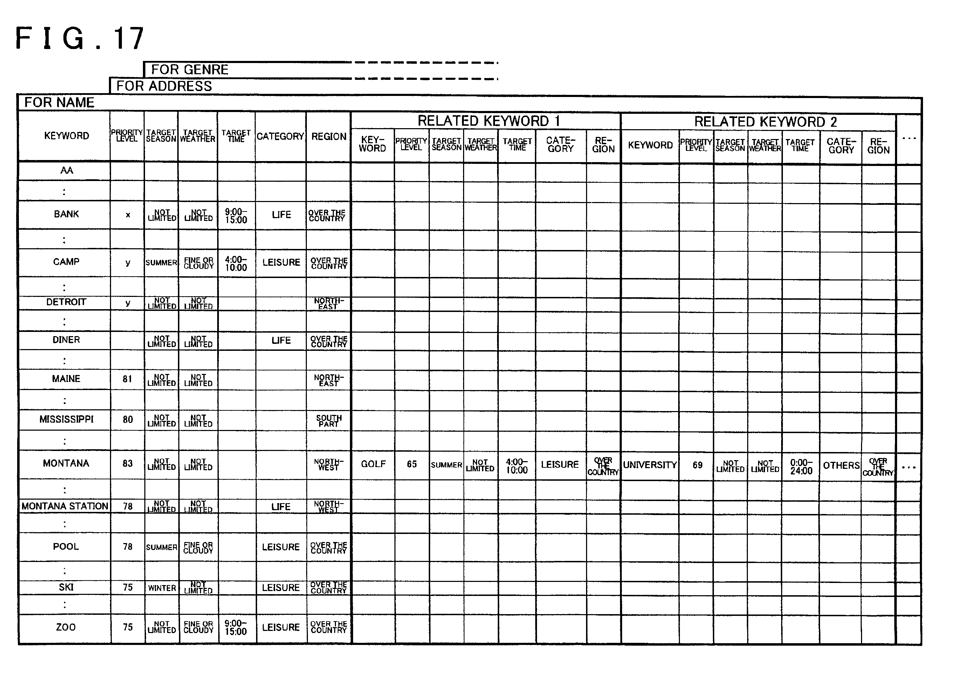

FIG. 17 is a schematic diagram which shows the content of the keywords stored in the keyword data file 58. Each keyword is composed of words each of which is a component of the name of an item of the destination data.
As shown in FIG. 17, with the navigation apparatus modified to US specifications, like the first embodiment, priority is defined for each keyword provided in the form of an alphabetical character string.
For example, the priority of the destination candidate including a keyword "Montana" is defined as "83" points. Furthermore, the region is set to "the Northwest". Accordingly, in a case in which the current position is within the Northwest, the priority level is incremented by a predetermined number of points n, e.g., 3 points, thereby adjusting the priority level from "83" points to "86" points.
Also, related keywords can be set for the former keyword. The words which are used with high frequency as the search keywords in addition to the former keyword are set as such related keywords. For example, the words which are a part of or all the words of the name of the destination are set to the related keywords. Specifically, the words such as "golf", "university", etc., are set to the related keywords for the keyword "Montana".

It should be noted that the duration that corresponds to the "season" item defined in the keyword data file 58 is set such that it matches the season in the target country or region for the navigation apparatus. For example, with the navigation apparatus modified to Japanese specifications, the duration from December up to February is set to "winter".
On the other hand, with the navigation apparatus modified to Australian specifications for Australia which is in the southern hemisphere, the duration from June up to August is set to "winter".
Also, the "time" item defined in the keyword data file 58 is set such that it matches the season in the target country or region for the navigation apparatus. For example, in the countries and regions implementing daylight saving time, the "time" item is set ahead one hour during the daylight saving time.

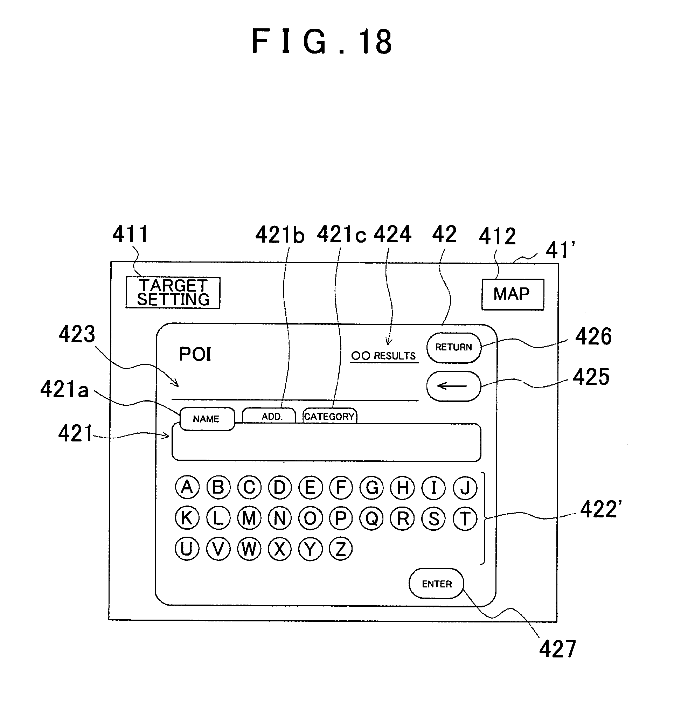

FIG. 18 shows a navigation apparatus modified to US specifications, including an input device 41' and a display 42.
In the description of the navigation apparatus modified to US specifications with reference to FIG. 18, each item is displayed in English. However, the keys and display regions having the same functions as those in the first embodiment (FIG. 5) are denoted by the same reference numerals.
As shown in FIG. 18, the input keyboard 422' is formed of keys that allow the user to input alphabetical letters from "A" to "Z".

With the navigation apparatus including the input device 41 and various kinds of data modified to US specifications which is a target country as described above, the destination setting processing is executed in the same way as in the aforementioned first embodiment (FIG. 6).
It should be noted that, in the second embodiment, the user inputs alphabetical letters (character string) via the input keyboard 422', and the aforementioned destination data file 56 and the keyword data file 58 modified to US specifications are used as the reference data.

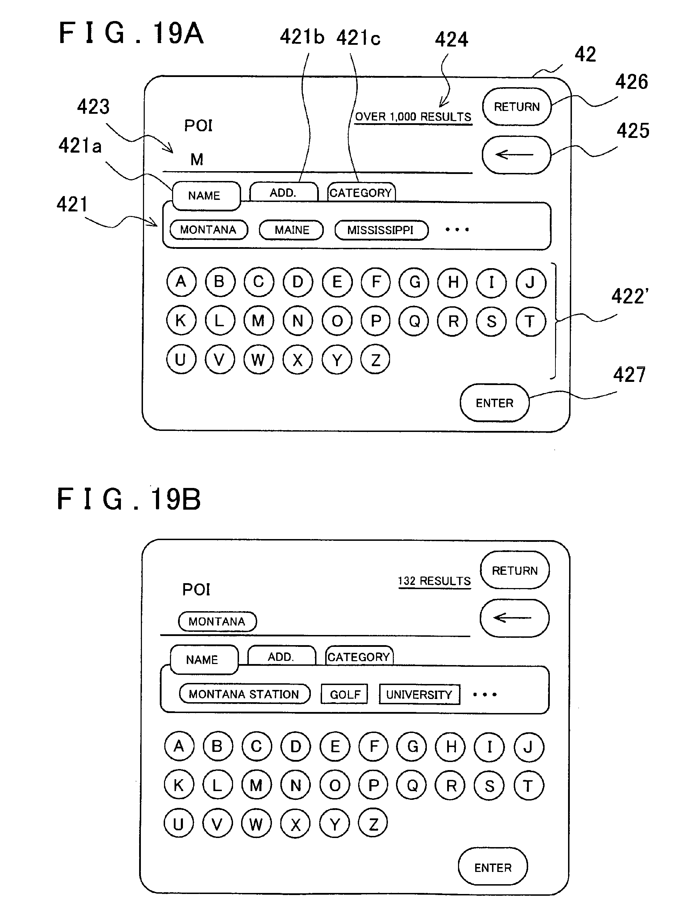

FIG. 19 shows an example of the display state of the destination setting screen in the processing following Step 17 in the navigation apparatus modified to US specifications.
FIG. 19A shows the destination setting screen displayed after the user inputs an alphabetical character "M" via the input keyboard 422'. In this state, the character "M" is displayed in the input character field 423. Furthermore, the keywords (name) such as "Montana", "Maine", "Mississippi", etc., a part of which matches the input character "M", are extracted, and displayed in the keyword box 421 of the name tab 421a.
Upon the user touching the address tab 421 b on the destination setting screen shown in FIG. 19A, the keyword box 421 for the "address" category is displayed at the frontmost. Furthermore, the keywords for the address, which have been narrowed down according to the input character "M", are displayed in the keyword box 421.

With such an arrangement, the keywords thus narrowed down are displayed in the keyword box 421 as the selectable keys. Furthermore, the priority level of each keyword is adjusted based upon the current situation (season, weather, time, category, region, etc.) with reference to the priority score adjustment rules (FIG. 4) in the same way as in the first embodiment. With such an arrangement, the keywords are displayed in the keyword box 421 in descending order of the priority level of each keyword after the adjustment of the priority.
The keyword "Maine" should be displayed at a position before the keywords "Mississippi" and "Montana" in alphabetical order. However, in FIG. 19A, the keyword "Montana" having a higher priority level (see FIG. 17) is displayed at the top position.
As described above, with the navigation apparatus modified to US specifications, the display order of the keywords is adjusted according to the priority level, thereby allowing the keywords to be displayed in a manner matching the user's preference.

In a case in which the user has selected a keyword "Montana" from among those displayed in the keyword box 421, the information processing control section 20 replaces the input character displayed in the input character field 423 by the keyword "Montana" thus selected. In this case, in a case in which a different keyword has already been displayed in the input character field 423 according to the previous operation, the keyword thus newly selected is displayed after the former keyword.
Then, the information processing control section 20 narrows down the keywords thus selected and narrows down the destination candidates.
For example, in a case in which the user has selected the keyword "Montana" in FIG. 19A, the keyword "Montana" is extracted. Furthermore, the other keywords "Maine" and "Mississippi" are removed from the keywords.

FIG. 19B shows the destination setting screen shown in FIG. 19A after the keyword "Montana" has been selected.
As shown in FIG. 19B, the character "M" input in a frame in the input character field 423 is replaced by the keyword "Montana" thus selected, thereby displaying the keyword "Montana" in the frame. Furthermore, the keyword "Montana station" further extracted and the related keywords "golf" and "university" associated with the keyword "Montana" thus selected are displayed in the keyword box 421.
It should be noted that, in a case of displaying the related keywords, the related keywords are displayed in addition to the keywords in descending order of the priority level after each priority level is adjusted based upon the current situation (time, place, etc.) in the same way as in the first embodiment.
As described above, in the same way as in the first embodiment, the navigation apparatus modified to US specifications allows the user to make a search for a destination by repeatedly performing keyword selection operation for the keywords displayed in the form of a list.

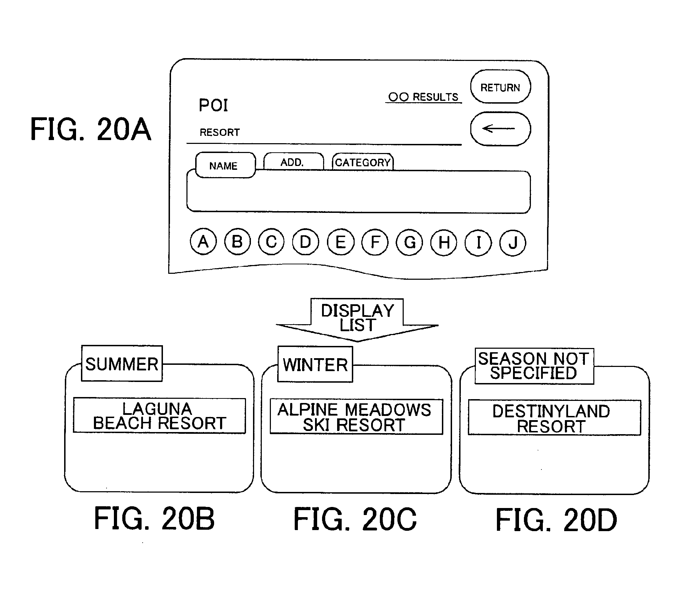

FIG. 20 through FIG. 27 show examples of different destination candidates displayed in the form of a list based upon the priority scores adjusted according to the priority score adjustment rules shown in FIG. 4 in the navigation apparatus modified to US specifications.
FIG. 20 shows an example of different destination candidates displayed in the form of a list in a case in which season adjustment rules are applied as the priority score adjustment rules.
FIG. 20A shows the state in which the selected keyword "Resort" is displayed in the input character field 423. When the user selects the completion (enter) key 427 in this state, in a case in which the current situation matches "summer", the scores of the destination candidates which have been narrowed down and which are stored in the RAM 24 are adjusted according to the priority adjustment rules that raise the priority scores of the location candidates (destination candidates) including keywords associated with "summer", in the same way as in the first embodiment. As a result, in this case, the destination candidate "Laguna Beach Resort" is displayed with high priority in the form of a list, as shown in FIG. 20B.
On the other hand, in a case in which the current situation matches "winter", the destination candidate "Alpine Meadows Ski Resort" is displayed with high priority in the same way in the form of a list as shown in FIG. 20C. In a case in which the user has not specified the "season", the destination candidate "Destinyland Resort" is displayed with high priority in the form of a list as shown in FIG. 20D.

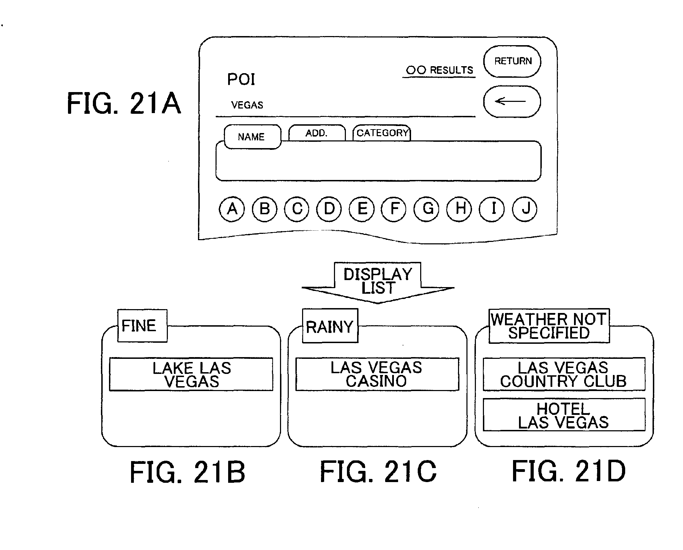

FIG. 21 shows an example of different destination candidates displayed in the form of a list in a case in which weather adjustment rules are applied as the priority score adjustment rules.
As shown in FIG. 21A, when the user selects the completion (enter) key 427 in the state in which an input keyword "vegas" is displayed in the input character field 423, in a case in which the current situation matches "fine", the destination candidate "Lake Las Vegas" is displayed with high priority according to the priority score adjustment rules, as shown in FIG. 21B.
On the other hand, in a case in which the current situation matches "rainy", the destination candidate "Las Vegas Casino" is displayed with high priority in the form of a list in the same way as shown in FIG. 21C. In a case in which the user has not specified the "weather", the destination candidates are displayed in the form of a list in order of "Las Vegas Country Club", "Hotel Las Vegas", etc., as shown in FIG. 21D.

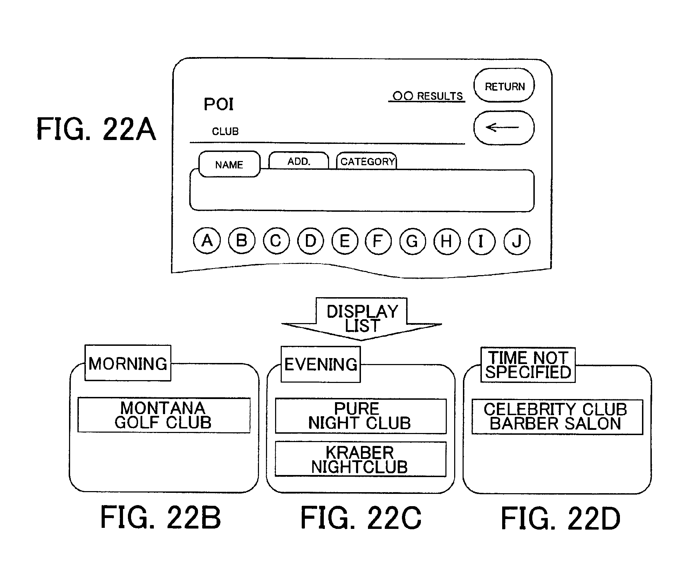

FIG. 22 shows an example of different destination candidates displayed in the form of a list in a case in which time adjustment rules are applied as the priority score adjustment rules.
As shown in FIG. 22A, when the user selects the completion (enter) key 427 in the state in which the input keyword "club" is displayed in the input character field 423, in a case in which the current situation matches "morning", the destination candidate "Montana Golf Club" is displayed with high priority in the form of a list according to the priority score adjustment rules, as shown in FIG. 22B
On the other hand, in a case in which the current situation matches "evening", the destination candidates are displayed in the form of a list in the same way in order of "Pure Night Club", "Kraber Nightclub", etc., as shown in FIG. 22C. In a case in which the user has not specified the "time", the destination candidate "Celebrity Club Barber Salon" is displayed with high priority in the form of a list as shown in FIG. 22D.

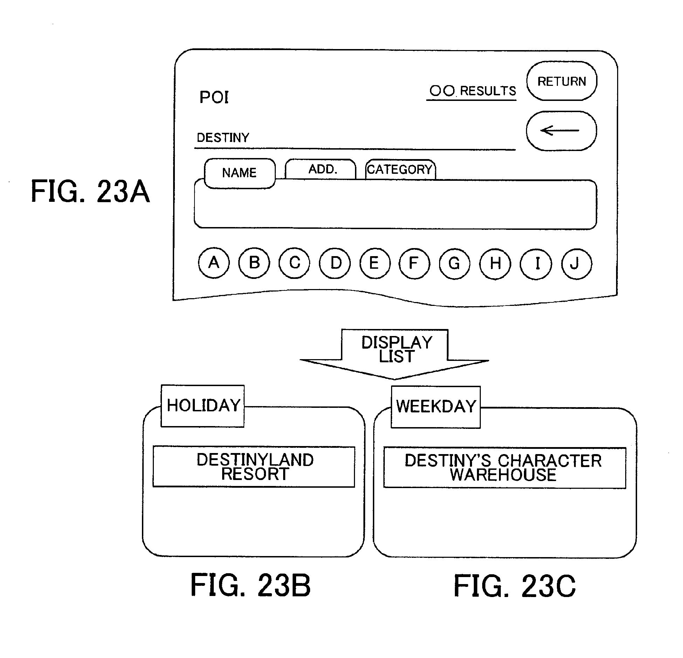

FIG. 23 shows an example of different destination candidates displayed in the form of a list in a case in which calendar adjustment rules are applied as the priority score adjustment rules.
As shown in FIG. 23A, when the user selects the completion (enter) key 427 in the state in which an input keyword "destiny" is displayed in the input character field 423, in a case in which it is a holiday today, the destination candidate "Destinyland Resort", which is far from the current position, is displayed with high priority in the form of a list according to the priority score adjustment rules, as shown in FIG. 23B. On the other hand, in a case in which it is an ordinary day today, the destination candidate "Destiny's Character Warehouse", which is a nearby location, is displayed with high priority in the form of a list as shown in FIG. 23C.

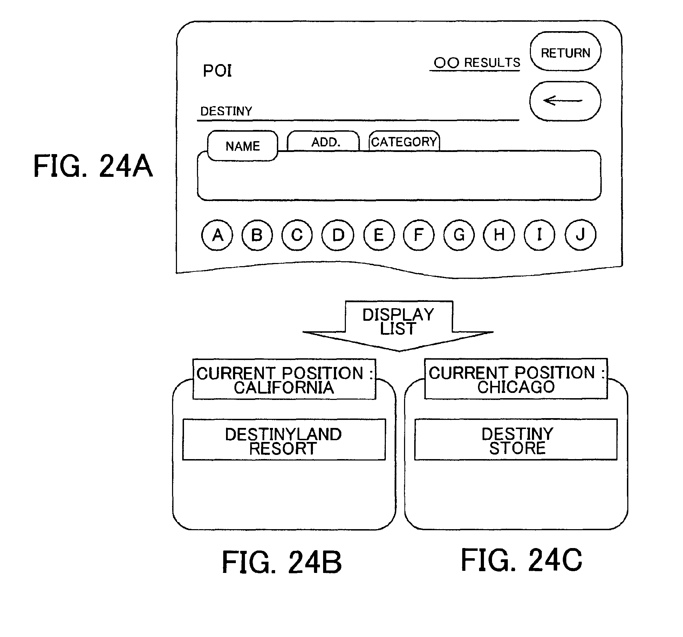

FIG. 24 shows an example of different destination candidates displayed in the form of a list in a case in which current-position adjustment rules are applied as the priority score adjustment rules.
As shown in FIG. 24A, when the user selects the completion (enter) key 427 in the state in which an input keyword "destiny" is displayed in the input character field 423, in a case in which the current position is California, the "Destinyland Resort", which includes a keyword associated with "California", is displayed with high priority in the form of a list as shown in FIG. 24B. On the other hand, in a case in which the current position is Chicago, the "Destiny Store", which includes a keyword associated with "Chicago", is displayed with high priority in the form of a list in the same way, as shown in FIG. 24C.

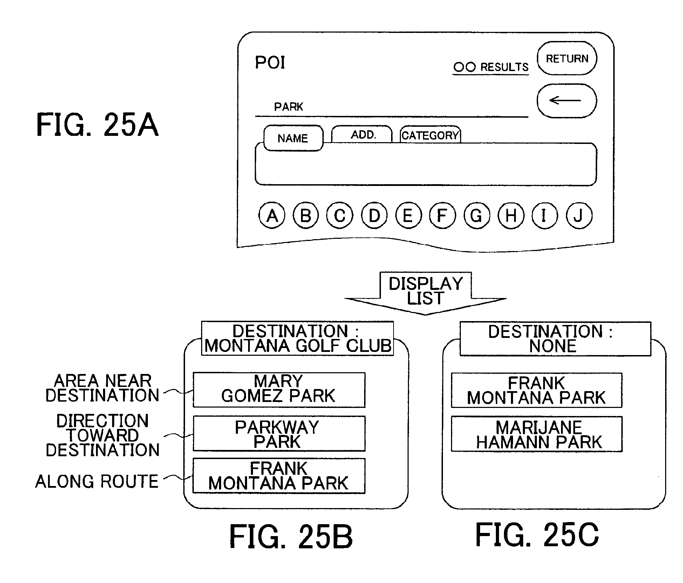

FIG. 25 shows an example of different destination candidates displayed in the form of a list in a case in which destination adjustment rules are applied as the priority score adjustment rules.
As shown in FIG. 25A, when the user selects the completion (enter) key 427 in the state in which an input keyword "park" is displayed in the input character field 423, in a case in which "Montana golf club" has already been set as the destination, the location candidates are displayed in order of "Mary Gomez Park", which is near the destination, "Parkway Park", which is in the direction toward the destination, "Frank Montana Park", which is near the route, etc., as shown in FIG. 25B, according to the priority score adjustment rules which raise the priority levels of the location candidates near the destination, the location candidates in the direction toward the destination, and the location candidates near the route.
On the other hand, in a case in which the destination has not been set, the location candidates are displayed in order of "Frank Montana Park" and "Marijane Hamann Park", which are around the current position, etc.

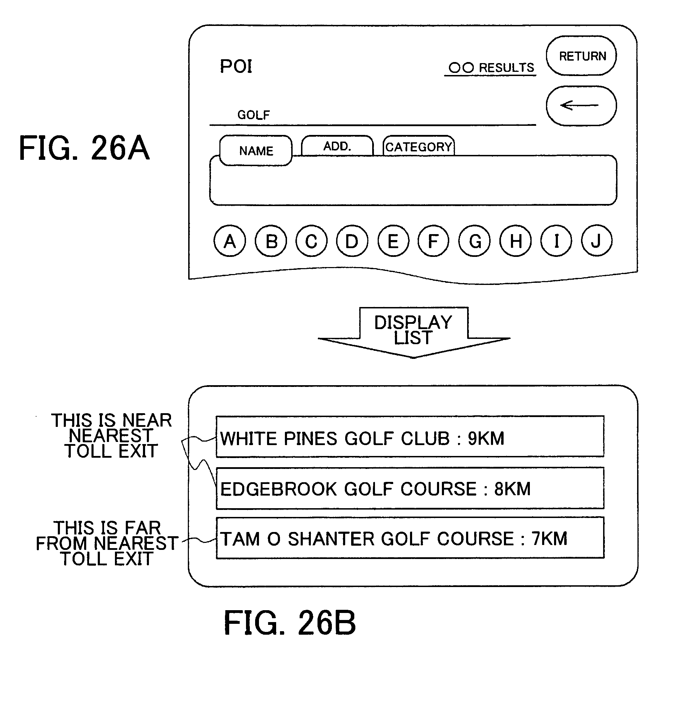

FIG. 26 shows an example of different destination candidates displayed in the form of a list in a case in which location adjustment rules are applied as the priority score adjustment rules.
As shown in FIG. 26A, when the user selects the completion (enter) key 427 in the state in which an input keyword "golf" is displayed in the input character field 423, the destination candidates are displayed in ascending order of the distance between the location candidate and the nearest toll exit, e.g., in order of "White Pines Golf Club; 9 km", "Edgebrook Golf Course; 8 km", and "Tam O Shanter Golf Course"; 7 km", as shown in FIG. 26B.
It should be noted that the distance information displayed in the list, i.e., "9 km", "8 km", and "7 km" are the distances between the respective places and the current position. In this state, the "White Pines Golf Club" is displayed at a higher priority level regardless of the distance from the current position, since the distance from the toll exit is smaller.

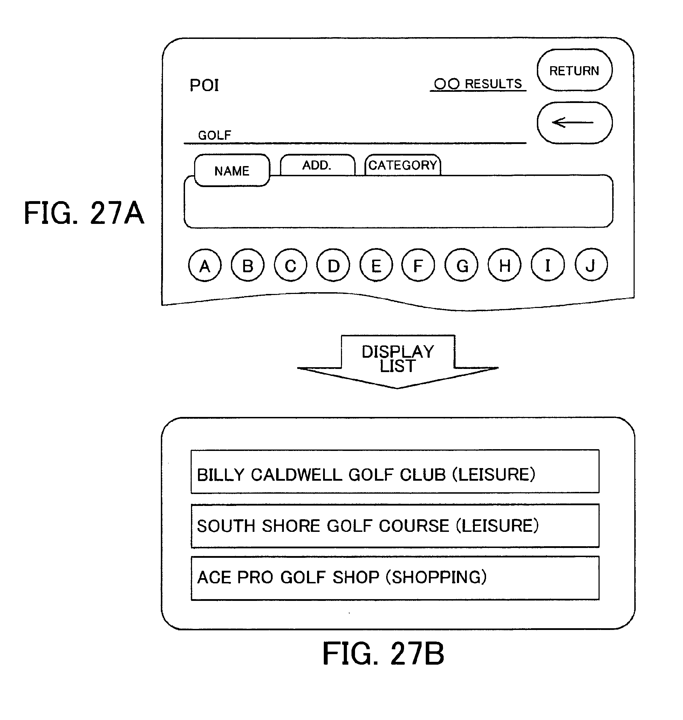

FIG. 27 shows an example of different destination candidates displayed in the form of a list in a case in which genre adjustment rules are applied as the priority score adjustment rules.
As shown in FIG. 27A, when the user selects the completion (enter) key 427 in the state in which an input keyword "golf" is displayed in the input character field 423, the destination candidates are displayed in the form of a list according to the priority score adjustment rules in order of "Billy Caldwell Golf Club; leisure", "South Shore Golf Course; leisure", "Ace Pro Golf Shop; shopping", etc., as shown in FIG. 27B.

As described above, with the navigation apparatus modified to US specifications so as to allow the user to input alphabetical text data via the input character field 423, the listing order is adjusted according to the priority score adjustment rules in the same way as in the first embodiment, thereby allowing the destination candidates to be displayed in the form of a list in order more suitable for the user.

Description has been made in the second embodiment regarding a navigation apparatus modified to US specifications as an example of the navigation apparatus for foreign countries other than Japan. However, the target countries and regions are not restricted to the US. For example, the navigation apparatus may be modified to accommodate desired foreign countries or regions, such as Germany, Spain, France, Arab countries, China, Korea, Australia, etc.
It should be noted that the input device 41 includes the input keyboard 422 that supports the local language for the target country (region), and the specifications of each data set are defined for the target country (region).
For example, with the navigation apparatus modified to Chinese specifications, the input device 41 includes an input keyboard 422 which supports the Chinese pinyin input method. The names of the items of the destination data, which have been determined for the target country or region for the navigation apparatus, are stored in the destination data file 56 in the local language.

The input target language does not necessarily have to be set to the local language in the target country (region) for the navigation apparatus. For example, a navigation apparatus that supports the German input method may be modified to French specifications. With such an arrangement, the search target data sets, which are searched in the destination search step, i.e., the reference data sets, which are compared with the input character in the destination search step (e.g., the names of destinations, keywords, addresses, etc.) are stored in the input-supported language in the destination data file 56 and the keyword data file 58.
It should be noted that the search target data may also be stored in the local language for the target country (region), in addition to the input-supported language.
It should be noted that the data other than the search target data, which is not searched in the destination search step, e.g., additional information data, does not need to be stored in the input-supported language. Specifically, the data other than the search target data may be stored in either the input-supported language or the local language for the target country (region). Also, the data other than the search target data may be stored in both the input-supported language and the local language for the target country (region).
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A navigation apparatus comprising:
a destination data storage unit (56) adapted for storing destination data which is a search target;
a character input unit (41) adapted for allowing characters to be input for making a search;
a search unit (20) adapted for searching for the destination data including the input characters as destination candidates;
a priority determination unit adapted for determining a priority level displayed for each of the destination candidates thus searched based upon a content thereof and a current situation; and
a display unit (42) adapted for displaying the destination candidates in descending order of the priority level thus determined.

2. The navigation apparatus according to claim 1, wherein:
the priority level is assigned to each item of the destination data;
the priority determination unit is adapted for adjusting the priority level assigned to the destination candidate according to adjustment rules for adjusting the priority level based upon the content of the destination candidate and the current situation; and
the display unit (42) is adapted for displaying the destination candidates in descending order of the priority level thus adjusted.

3. The navigation apparatus according to claim 1 or 2, wherein the adjustment rules are defined for at least one of season, weather, time, relation with consecutive holidays, current position, destination, the distance between the nearest toll exit and the destination, and genre.

4. A navigation program product, which when executed on a computer, is adapted for causing the computer to perform the steps of:
allowing characters to be input for making a search by a character input unit (41);
searching by a search unit in a destination data storage unit (56), which stores destination data that is a search target, for the destination data including the input characters as destination candidates;
determining by a priority determination unit a priority level displayed for each of the destination candidates thus searched based upon a content thereof and a current situation; and
displaying the destination candidates by a display unit (42) in descending order of the priority level thus determined.
